# EUROPEAN PATENT APPLICATION

(11) **EP 3 929 853 A1**
(43) Date of publication of application: **29.12.2021**
(21) Application number: 21181678.0
(22) Date of filing: 25.06.2021
(51) Int. Cl.: G06Q 30/02, G06Q 50/00, G06N 5/02

(54) **SYSTEMS AND METHODS FOR FEATURE ENGINEERING BASED ON GRAPH LEARNING**

(30) Priority: 26.06.2020 US 202016913054
(71) Applicant: Facebook, Inc., Menlo Park, CA 94025 (US)
(72) Inventor: Luhui, Hu, Menlo Park (US); Yinglong, Xia, Menlo Park (US)
(74) Representative: Murgitroyd & Company

(57) **Abstract**

In one embodiment, a computing system may receive query information associated with a machine-learning model. The system may access a knowledge graph that defines relationships between a number of machine-learning models and a number of features of the machine-learning models. The system may determine, based on the knowledge graph and the query information, one or more correlation metrics indicating correlations between the machine-learning model and one or more features of the features in the knowledge graph. The system may determine one or more recommended features for the machine-learning model based on the one or more correlation metrics and the one or more features.

## Description

### TECHNICAL FIELD

This disclosure generally relates to machine-learning models, in particular, to feature engineering based on graph learning.

### BACKGROUND

A social-networking system, which may include a social-networking website or a mobile application, may enable its users (such as persons or organizations) to interact with it and with each other through it. The social-networking system may, with input from a user, create and store in the social-networking system a user profile associated with the user. The user profile may include demographic information, communication-channel information, and information on personal interests of the user. The social-networking system may also, with input from a user, create and store a record of relationships of the user with other users of the social-networking system, as well as provide services (e.g., wall posts, photo-sharing, event organization, messaging, games, or advertisements) to facilitate social interaction between or among users.

The social-networking system may send over one or more networks content or messages related to its services to a mobile or other computing device of a user. A user may also install software applications on a mobile or other computing device of the user for accessing a user profile of the user and other data within the social-networking system. The social-networking system may generate a personalized set of content objects to display to a user, such as a newsfeed of aggregated stories of other users connected to the user.

### SUMMARY OF PARTICULAR EMBODIMENTS

Accordingly, the present invention is directed to methods, systems, computer readable media and computer programs according to the appended claims.

Particular embodiments described herein relate to systems and methods of using knowledge graphs and graph learning to recommend features for machine-learning (ML) models. The system may receive a number of ML models, with associated features that are determined based on related domain knowledge, from another computing system or from user inputs. The system may generate a knowledge graph to represent the relations between these ML models and these features as determined based on related domain knowledge or based on inferred correlations through graph learning. The knowledge graph may include a number of nodes and a number of edges connecting these nodes. Each node may represent a ML model or a feature. Each edge may represent a relationship between the two nodes connected by that edge and may be associated with a weight for characterizing the represented relationship. The ML models and features may be associated with respective tags for characterizing respective ML models or features. The system may use graphic neural networks, machine-learning-based intelligent logic, or rule-based intelligent logic to learn new knowledge (e.g., relationships, similarity, importance, relevance, correlations) about these models and features based on the knowledge graph. As an example, the features in the knowledge graph may be associated with feature attributes describing feature groups, feature layers, feature stores or associated problem domains. The features may be tagged based on the associated feature attributes. The system may cluster features into a number of feature categories in an *N*-dimensional space as defined by *N* number of feature tags. Then, the system may determine the similarity and relevance between these features based on the clustered results in the *N*-dimensional space. Duplicated features may be merged together. As another example, the system may determine the relevance between two models based on the features that are shared by these two models. As an example, the system may determine the relevance of a feature to a model of a particular problem domain based on the relationship of that feature to another model in the same or similar problem domain.

The system may dynamically update the knowledge graph based on new knowledge learned through graph learning. The system may add new edges to represent newly discovered relationships between associated nodes. During a feature engineering process for a particular ML model, the system may receive query information associated with that particular ML model and may use the knowledge graph to generate feature recommendations for that particular ML model. The recommended features may be determined based on their relevance to that particular ML model as inferred from the knowledge graph through the graph learning. For improving a ML model in the knowledge graph, the system may use the newly learned knowledge to recommend new features for that model to improve the effectiveness and precision of that ML model. The system may further take as input inference value metrics that reflect the importance or effectiveness of the corresponding model inference (e.g., exposure rate, prediction precision) in respective applications. The inference value metric may be used to determine or update the weights of the edges in the knowledge graph. The recommended features to a new or existing ML model may be evaluated based on corresponding inference value metrics. As a result, the system may provide an effective solution for automated feature engineering using the knowledge graph and graph learning.

In an aspect, the present invention is directed to a method comprising, by a computing system:
receiving query information associated with a machine-learning model;
accessing a knowledge graph that defines relationships between a plurality of machine-learning models and a plurality of features of the plurality of machine-learning models;
determining, based on the knowledge graph and the query information, one or more correlation metrics indicating correlations between the machine-learning model and one or more features of the plurality of features in the knowledge graph; and
determining one or more recommended features for the machine-learning model based on the one or more correlation metrics and the one or more features.

In embodiments of the method according to the present invention, the knowledge graph may further comprise a plurality of nodes and a plurality of edges connecting the plurality of nodes, and wherein the plurality of nodes may correspond to the plurality of machine-learning models and the plurality of features of the plurality of machine-learning model. In addition thereto, each of the plurality of features may further be associated with one or more machine-learning models based on associated domain knowledge or inferred correlations as determined based on the knowledge graph.

In embodiments of the method according to the present invention, the knowledge graph may further comprise a plurality of nodes and a plurality of edges connecting the plurality of nodes, and wherein the plurality of nodes may correspond to the plurality of machine-learning models and the plurality of features of the plurality of machine-learning model. In addition thereto, each edge of the plurality of edges may further connect two associated nodes in the knowledge graph, and wherein each edge is associated with a weight for characterizing a relationship between the two associated nodes.

In embodiments of the method according to the present invention, the knowledge graph may further comprise a plurality of nodes and a plurality of edges connecting the plurality of nodes, and wherein the plurality of nodes may correspond to the plurality of machine-learning models and the plurality of features of the plurality of machine-learning model. In addition thereto, the method may further comprise
generating, for the knowledge graph, a first new node corresponding to the machine-learning model;
generating, for the knowledge graph, one or more second new nodes corresponding to one or more initial features of the machine-learning model; and
generating, for the knowledge graph, one or more new edges connecting the first new node to the one or more second new nodes, wherein the one or more new edges are determined based on domain knowledge associated with the machine-learning model. In addition, the method may further comprise:
   determining one or more new correlations of the first new node and the one or more second new nodes with respect to the plurality of nodes in the knowledge graph; and
   integrating the first new node and the one or more second new nodes into the knowledge graph based on the one or more new correlations.

In embodiments of the method according to the present invention, the knowledge graph may further comprise a plurality of nodes and a plurality of edges connecting the plurality of nodes, and wherein the plurality of nodes may correspond to the plurality of machine-learning models and the plurality of features of the plurality of machine-learning model. In addition thereto, each edge of the plurality of edges may further connect two associated nodes in the knowledge graph, and wherein each edge is associated with a weight for characterizing a relationship between the two associated nodes.

In embodiments of the method according to the present invention, the knowledge graph may further comprise a plurality of nodes and a plurality of edges connecting the plurality of nodes, and wherein the plurality of nodes may correspond to the plurality of machine-learning models and the plurality of features of the plurality of machine-learning models. In addition thereto, the method may further comprise
generating, for the knowledge graph, a first new node corresponding to the machine-learning model;
generating, for the knowledge graph, one or more second new nodes corresponding to one or more initial features of the machine-learning model; and
generating, for the knowledge graph, one or more new edges connecting the first new node to the one or more second new nodes, wherein the one or more new edges are determined based on domain knowledge associated with the machine-learning model.

In embodiments of the method according to the present invention, the knowledge graph may further comprise a plurality of nodes and a plurality of edges connecting the plurality of nodes, and wherein the plurality of nodes may correspond to the plurality of machine-learning models and the plurality of features of the plurality of machine-learning models. In addition thereto, the method may further comprise
generating, for the knowledge graph, a first new node corresponding to the machine-learning model;
generating, for the knowledge graph, one or more second new nodes corresponding to one or more initial features of the machine-learning model; and
generating, for the knowledge graph, one or more new edges connecting the first new node to the one or more second new nodes, wherein the one or more new edges are determined based on domain knowledge associated with the machine-learning model. In addition thereto the method may further comprise:
determining one or more new correlations of the first new node and the one or more second new nodes with respect to the plurality of nodes in the knowledge graph; and
integrating the first new node and the one or more second new nodes into the knowledge graph based on the one or more new correlations.

In embodiments of the method according to the present invention, the knowledge graph may further comprise a plurality of nodes and a plurality of edges connecting the plurality of nodes, and wherein the plurality of nodes may correspond to the plurality of machine-learning models and the plurality of features of the plurality of machine-learning models. In addition thereto, the method may further comprise
generating, for the knowledge graph, a first new node corresponding to the machine-learning model;
generating, for the knowledge graph, one or more second new nodes corresponding to one or more initial features of the machine-learning model; and
generating, for the knowledge graph, one or more new edges connecting the first new node to the one or more second new nodes, wherein the one or more new edges are determined based on domain knowledge associated with the machine-learning mode. In addition thereto, the one or more correlation metrics may be determined based on one or more graph relationships between the first new node and one or more nodes corresponding to the one or more features.

In embodiments of the method according to the present invention, the knowledge graph may further comprise a plurality of nodes and a plurality of edges connecting the plurality of nodes, and wherein the plurality of nodes may correspond to the plurality of machine-learning models and the plurality of features of the plurality of machine-learning models. In addition thereto, the method may further comprise
generating, for the knowledge graph, a first new node corresponding to the machine-learning model;
generating, for the knowledge graph, one or more second new nodes corresponding to one or more initial features of the machine-learning model; and
generating, for the knowledge graph, one or more new edges connecting the first new node to the one or more second new nodes, wherein the one or more new edges are determined based on domain knowledge associated with the machine-learning mode. In addition thereto, the one or more correlation metrics are determined based on one or more graph relationships between the first new node and one or more nodes corresponding to one or more machine-learning models of the plurality of machine-learning models, and wherein the one or more features are associated with the one or more machine-learning models.

In embodiments of the method according to the present invention, the knowledge graph may further comprise a plurality of nodes and a plurality of edges connecting the plurality of nodes, and wherein the plurality of nodes may correspond to the plurality of machine-learning models and the plurality of features of the plurality of machine-learning models. In addition thereto, the method may further comprise
generating, for the knowledge graph, a first new node corresponding to the machine-learning model;
generating, for the knowledge graph, one or more second new nodes corresponding to one or more initial features of the machine-learning model; and
generating, for the knowledge graph, one or more new edges connecting the first new node to the one or more second new nodes, wherein the one or more new edges are determined based on domain knowledge associated with the machine-learning mode. In addition thereto, the one or more correlation metrics are determined based on one or more graph relationships between the first new node and one or more nodes corresponding to one or more machine-learning models of the plurality of machine-learning models, and wherein the one or more features are associated with the one or more machine-learning models, and the machine-learning model may share one or more features with the one or more machine-learning models of the knowledge graph.

In embodiments of the method according to the present invention, the knowledge graph may further comprise a plurality of nodes and a plurality of edges connecting the plurality of nodes, and wherein the plurality of nodes may correspond to the plurality of machine-learning models and the plurality of features of the plurality of machine-learning models. In addition thereto, the method may further comprise
generating, for the knowledge graph, a first new node corresponding to the machine-learning model;
generating, for the knowledge graph, one or more second new nodes corresponding to one or more initial features of the machine-learning model; and
generating, for the knowledge graph, one or more new edges connecting the first new node to the one or more second new nodes, wherein the one or more new edges are determined based on domain knowledge associated with the machine-learning mode. In addition thereto, the one or more correlation metrics are determined based on one or more graph relationships between the first new node and one or more nodes corresponding to one or more machine-learning models of the plurality of machine-learning models, and wherein the one or more features are associated with the one or more machine-learning models. In addition thereto, the machine-learning model may share a problem domain with the one or more machine-learning models of the knowledge graph.

In embodiments of the method according to the present invention, each machine-learning model of the plurality of machine-learning models is associated with one or more tags for characterizing that machine-learning model, and wherein the machine-learning model is associated with one or more initial features, the method may further comprise:
determining one or more new tags for the machine-learning model and each initial feature of the machine-learning model. In addition thereto the method may further comprise clustering the one or more initial features of the machine-learning model and the plurality of features in the knowledge graph into a plurality of feature categories in a *N*-dimensional space as defined by N number of tags and optionally may also comprise merging one or more of the initial features and one or more of the plurality of features based on associated feature categories. In addition. Furthermore, the one or more recommended features may be associated with a feature category, and wherein the feature category is associated with an initial feature of the machine-learning model.

In embodiments of the method according to the present invention, the one or more correlation metrics may be determined by a graphic neural network, wherein the graphic neural network may identify one or more hidden correlations in the knowledge graph, and wherein the one or more correlation metrics are determined based on the one or more hidden correlations in the knowledge graph identified by the graphic neural network. In addition thereto, the method may further comprise generating a new edge corresponding to each hidden correlation identified by the graphic neural network; and
updating the knowledge graph based on the generated new edges.

In embodiments of the method according to the present invention, the method may further comprise receiving one or more inference value metrics associated with the machine-learning model with the one or more recommended features, wherein the one or more inference value metrics comprise performance parameters of the machine-learning model with the one or more recommended features; and
evaluating the one or more recommended features for the machine-learning model based on the received one or more inference value metrics. In addition theretoe, the method may further comprise adjusting one or more weights of one or more corresponding edges of the knowledge graph based on the one or more inference value metrics.

In an aspect, the present invention is directed to one or more computer-readable storage media, preferably non-transitory storage media, embodying software that is operable when executed to perform the methods as described above, or to receive query information associated with a machine-learning model;
access a knowledge graph that defines relationships between a plurality of machine-learning models and a plurality of features of the plurality of machine-learning models;
determine, based on the knowledge graph and the query information, one or more correlation metrics indicating correlations between the machine-learning model and one or more features of the plurality of features in the knowledge graph; and
determine one or more recommended features for the machine-learning model based on the one or more correlation metrics and the one or more features.

In an aspect, the present invention is directed to a system comprising:
one or more non-transitory computer-readable storage media embodying instructions; and
one or more processors coupled to the storage media and operable to execute the instructions to perform the methods as described above or to:
   receive query information associated with a machine-learning model;
   access a knowledge graph that defines relationships between a plurality of machine-learning models and a plurality of features of the plurality of machine-learning models;
   determine, based on the knowledge graph and the query information, one or more correlation metrics indicating correlations between the machine-learning model and one or more features of the plurality of features in the knowledge graph; and
      determine one or more recommended features for the machine-learning model based on the one or more correlation metrics and the one or more features.

In an aspect, the invention is directed to a computer program comprising instructions which, when the program is executed by a computer, cause the computer to carry out the methods as described above.

The embodiments disclosed herein are only examples, and the scope of this disclosure is not limited to them. Particular embodiments may include all, some, or none of the components, elements, features, functions, operations, or steps of the embodiments disclosed above. Embodiments according to the invention are in particular disclosed in the attached claims directed to a method, a storage medium, a system and a computer program product, wherein any feature mentioned in one claim category, e.g. method, can be claimed in another claim category, e.g. system, as well. The dependencies or references back in the attached claims are chosen for formal reasons only. However, any subject matter resulting from a deliberate reference back to any previous claims (in particular multiple dependencies) can be claimed as well, so that any combination of claims and the features thereof are disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

### BRIEF DESCRIPTION OF THE DRAWINGS

FIG. 1 illustrates an example process for training a machine-learning model and applying the machine-learning model to applications.
FIG. 2 illustrates an example framework for a feature knowledge graph system.
FIG. 3A illustrates an example knowledge graph.
FIG. 3B illustrates an example process for generating and integrating new nodes to the knowledge graph.
FIG. 3C illustrates an example process for clustering features in a knowledge graph based on corresponding tags associated with these features.
FIG. 3D illustrates an example knowledge graph including two models with shared features.
FIG. 3E illustrates an example knowledge graph used for recommending features for correlated models.
FIG. 3F illustrates an example knowledge graph including embedded sub-graphs.
FIG. 3G illustrates an example knowledge graph used for recommending features for ML models.
FIG. 4 illustrates an example process for using transfer learning for feature engineering.
FIG. 5 illustrates an example method of using a knowledge graph to recommend features for machine-learning models.
FIG. 6 illustrates an example network environment associated with a social-networking system
FIG. 7 illustrates example social graph.
FIG. 8 illustrates an example computer system.

### DESCRIPTION OF EXAMPLE EMBODIMENTS

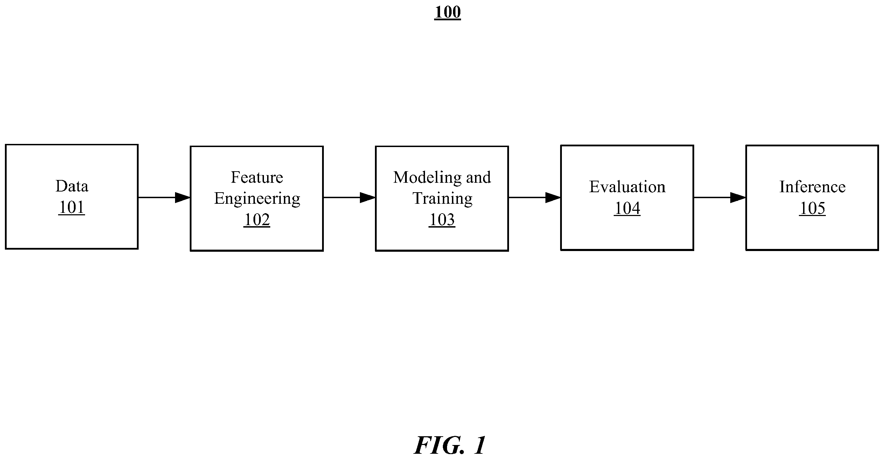

**FIG. 1** illustrates an example process 100 for training a machine-learning model and applying the machine-learning model to applications. A machine-learning (ML) model may need a number of features to be effectively trained and to be applied to applications. These features may play a critical role in the training efficiency and model accuracy of the ML model. Feature engineering 102 may be the process of using domain knowledge or data driven techniques to extract and create features for ML models. As an example, feature engineering may be performed by human experts to determine features for a ML model based on the domain knowledge associated with that ML model. As another example, the system may use data driven techniques (e.g., feature extracting algorithms) to extract or generate features for a ML model from data 101 collected from the associated problem domain. The determined features may be used in a modeling and training process 103 to create a ML model or/and train the ML model based on these features. Then, the determined features and corresponding ML models may be evaluated in an evaluation process 104. After that, in an inference stage 105, the determined features and corresponding ML models may be applied to applications.

Feature engineering is a process for generating features for machine-learning (ML) models of specific problem domains to be used in the training and inference processes of the ML models. Existing techniques for feature engineering are complex and inefficient for several reasons. First, features are usually associated a specific problem domain and cannot be easily reused in a different problem domain. Second, although inference results may be used for generating and updating features, there is no effective mechanism to evaluate effectiveness of features and determine their relevance to a particular model. Third, when ML models become more complicated (e.g., multiple-tower models, multi-task models, multi-stage models) and there is no effective mechanism for automatically discovering feature knowledge (e.g., relationships, relevance, and importance) between features and models of different problem domains, different towers or different tasks. Fourth, features may be organized by different feature groups and feature layers and there is no effective mechanisms to discover the relationships between the features of different groups or layers. In addition, for some problem domains, there may be a large amount of data that needs to be processed to determine the features for the ML models in these problem domains. As a result, in many ML use cases, it could be very time and effort consuming for data scientists and ML engineers to determine appropriate features for ML models during the feature engineering process.

To solve these problems, particular embodiments of the system may use a knowledge graph to automatically determine features for ML models. The system may generate a knowledge graph to represent the relationships between a number of ML models and a number of features associated with these ML models. The system may use graphic neural networks or rule-based intelligent logics to learn new knowledge (e.g., relationships, similarity, importance, relevance, correlations) about these models and features based on the knowledge graph. The system may dynamically update the knowledge graph based on new knowledge learned through graph learning. During a feature engineering process, the system may receive query information associated with a particular ML model and may use the knowledge graph to determine features for that particular ML model. The system may recommend new features for a ML model to improve the effectiveness and precision of that ML model. The system may receive inference value metrics that reflect the importance or effectiveness of the corresponding model inference in respective applications and use the inference value metrics to determine the weight of the edges in the knowledge graph. As a result, the system may provide an effective solution for automated feature engineering using a knowledge graph and graph learning.

By using the knowledge graph for feature engineering, particular embodiments of the system may allow the feature engineering process to be more effective and efficient. By using graph learning based on the knowledge graph, particular embodiments of the system may discover hidden correlations between ML models and features that are not obvious to human experts. For example, using the graph structure, the features in different problem domains, different feature groups or layers may be linked with meaningful relationships. By using the knowledge graph, particular embodiments of the system may allow the known features of the mass feature repository to be reused in different ML models and allow knowledge of the existing models to be used to new knowledge domain. By using the feature knowledge graph system, particular embodiments of the system may apply information related to effectiveness of inference features directly in a fine-grained way to improve training effectiveness of ML models.

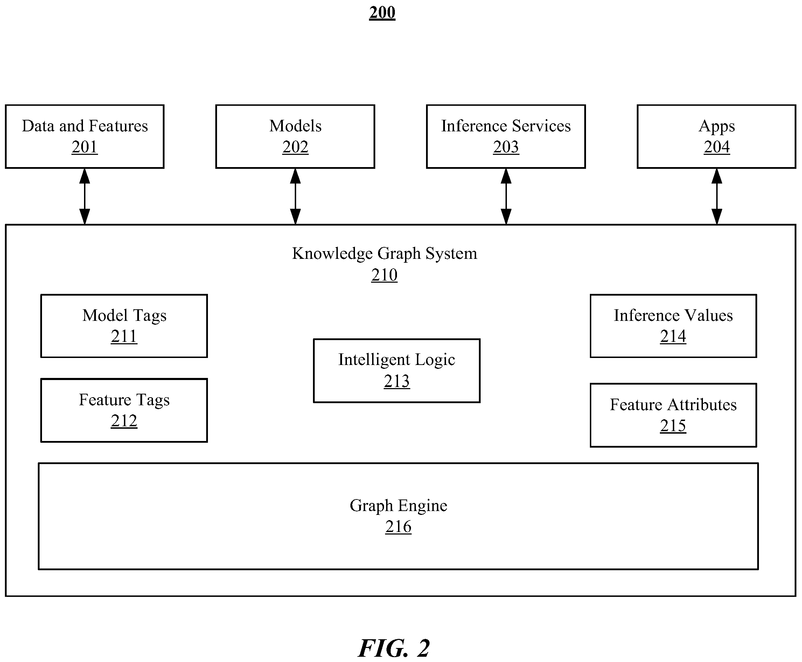

**FIG. 2** illustrates an example framework 200 for a feature knowledge graph system. In particular embodiments, the feature knowledge graph system 210 may include a number of modules or sub-systems including, for example, but not limited to, a model tag module 211, a feature tag module 211, an intelligent logic module 213, an inference value module 214, a feature attribute module 215, a graph engine 216, one or more interface modules for data input and output, etc. The feature knowledge graph system 210 may receive a number of ML models 202 with associated data and features 201 to generate a knowledge graph. In particular embodiments, the feature knowledge graph system 210 may receive the ML models 202 with associated data and features 201 from other computing systems using APIs of one or more interface modules or from user inputs. The received ML models and features may be stored in the graph engine 216. The graph engine 216 may generate a knowledge graph based on these ML models and features. The feature knowledge graph system 210 may generate one or more model tags for each ML model in the knowledge graph and may store the model tags in the model tag module 211. The feature knowledge graph system 210 may generate one or more feature tags for each feature in the knowledge graph and may store the feature tags in the feature tag module 212. The feature knowledge graph system 210 may use the model tags stored in the model tag module 211 to access the corresponding models stored in the knowledge graph in the graph engine 216. The feature knowledge graph system 210 may use the feature tags stored in the feature tag module 212 to access the corresponding features stored in the knowledge graph in the graph engine 216.

In particular embodiments, the feature knowledge graph system 210 may use the intelligent logic module 213 to learn new knowledge through graph learning based on the knowledge graph. In particular embodiments, the intelligent logic 213 may include one or more rule-based algorithms, statistic algorithms, or ML models (e.g., convolutional neural networks, graph neural networks). The intelligent logic module 213 may identify new relationships and discover hidden relationships between features and ML models in the knowledge graph. The new knowledge (e.g., new relationships) learned by the intelligent logic module 213 may be sent back to the graph engine 216 to update the knowledge graph. The feature knowledge graph system 210 may extract one or more feature attributes (e.g., feature groups, feature layers, feature stores, feature problem domains, etc.) for each feature and store the extracted feature attributes in the feature attribute module 215. The feature attributes may allow features to be easily tagged in the graphs and allow all related information in the machine learning process to be captured in the knowledge graph. It is notable that the feature attributes stored in the feature attribute module 215 as described here may be for helping build relationships in the knowledge graph. The features themselves may have many intrinsic attributes, such as data origins, creation dates, storage locations etc. These intrinsic attributes may be part of feature themselves other than the feature attributes as described here. In particular embodiments, the feature knowledge graph system 210 may extract one or more model attributes for capturing information related to training and models. The model attributes may capture information related training efficiency or other model metrics including, for example, but not limited to, precision (e.g., average precision score (APS)), recall, receiver operating characteristic (ROC), area under the curve (AUC), logic loss function (LLF), etc. Both training efficiency and model metrics may be used to choose better features and adjust modeling.

In particular embodiments, the feature knowledge graph system 210 may receive inference values of particular ML models with associated features and store the received inference values in the inference value module 214. For example, the feature knowledge graph system 210 may determine one or more features for an Ads recommendation model using the knowledge graph and deploy the Ads recommendation model with these features to the application 204. The application 204 may measure and track the inference values (e.g., click-through rates, exposure rates, conversion rates, revenuer per impress, conversion per impression) of the Ads recommendation model and send the inference values back to the feature knowledge graph system 210. The feature knowledge graph system 210 may use these inference values to determine or update the weight values in the knowledge graph. The feature knowledge graph system 210 may provide inference services 203 through one or more APIs or a user input/output module. The feature knowledge graph system 210 may receive a user query related to a particular ML model (e.g., a new ML model or an existing ML model in the knowledge graph). The feature knowledge graph system 210 may use graph learning to learn new knowledge (e.g., discovering new or hidden relationships of feature-model pairs, feature-feature pair, or model-model pairs) about that particular ML model being queried. The feature knowledge graph system 210 may generate recommended features for that ML model based on the newly learned knowledge or newly discovered relationships. The recommended features may be generated based on features of other pre-existing models in the knowledge graph.

In particular embodiments, a knowledge graph as described in this disclosure may be a data structure containing knowledge and information to represent interactions (e.g., represented by edges) between individual entities (e.g., represented by nodes). In particular embodiments, knowledge graphs may be applied to recommendation systems, biological protein networks, social networks, etc. In particular embodiments, graphs including structured knowledge or data may be employed along with machine learning for feature information processing and feature serving during a feature engineering process. In particular embodiments, graph learning may naturally convert knowledge information across various entities into ML models for appropriate problems to facilitate inference solutions. In particular embodiments, graph neural networks (GNN) may extend convolutional neural networks (CNNs) with graph embedding and convolutions for solving non-Euclidean domain problems. In this disclosure, "a feature knowledge graph" may be referred to as "a knowledge graph" and may include knowledge information (e.g., relationship information) related to a number of ML models and a number of associated features stored in the graph.

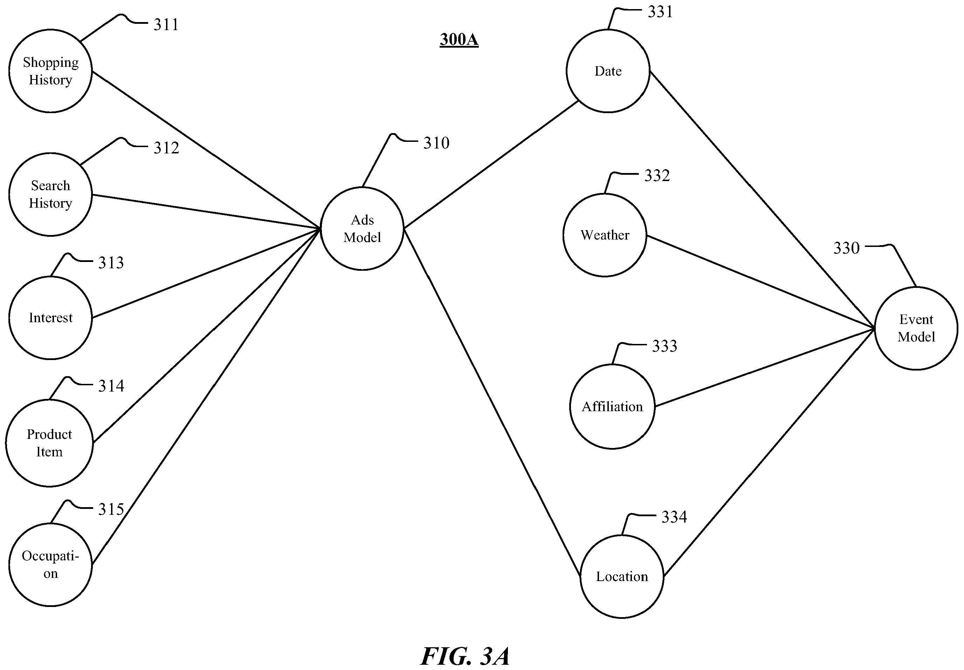

**FIG. 3A** illustrates an example knowledge graph 300A. In particular embodiments, a knowledge graph may include a number of nodes and a number of edges connecting these nodes. Each node of the knowledge graph may correspond to a ML model or a feature in the knowledge graph. Each feature in the knowledge graph may be associated with one or more ML models based on associated domain knowledge or inferred relationships as determined based on the knowledge graph. Each edge may connect two associated nodes in the knowledge graph and may be associated with a weight for characterizing the relationship between the two associated nodes. As an example and not by way of limitation, the knowledge graph 300A may include two model nodes corresponding to a first ML model for Ads recommendation 310 (i.e., Ads model) and a second ML model for event recommendation 330 (i.e., event model). The Ads model 310 may be associated with a number of features nodes including, for example, shopping history 311, search history 312, interest 313, product item 314, occupation 315, date 331, location 334, etc. The event model 330 may be associated with a number of feature nodes including, for example, date 331, weather 332, affiliation 333, location 334, etc. The Ads model 310 and the event model 330 may share two features including date 331 and location 334. The model nodes and corresponding features nodes that are associated with the model nodes may be connected by respective edges indicating the relationship of respective model-feature pairs. Each edge may be associated with a weight indicating a relevance level or importance level of the connected nodes.

In particular embodiments, the feature knowledge graph system may receive a number of ML models and corresponding features (e.g., using APIs from another computing system or from user inputs) and generate a knowledge graph. In particular embodiments, the system may parallel process the ML models and features for generating the knowledge graph. The system may generate a node for each ML model and each feature and generate a number of edges to connect these nodes based on the relationships determined from the corresponding domain knowledge. The system may use the intelligent logic or machine-learning models to identify new relationships between a node pair corresponding to a model-feature pair, a feature-feature pair, or a model-model pair. The system may update the knowledge graph based on the identified relationships by generating new edges to represent these relationships in the knowledge graph. Each edge may be associated with one or more weights for characterizing the relevance level or importance level of the represented relationship. The system may update the knowledge graph based on subsequent ML models and features received from other systems or user inputs. The system may update the knowledge graph based on domain knowledge received from subsequent user inputs. In particular embodiments, each model and each feature in the knowledge graph may have different revisions.

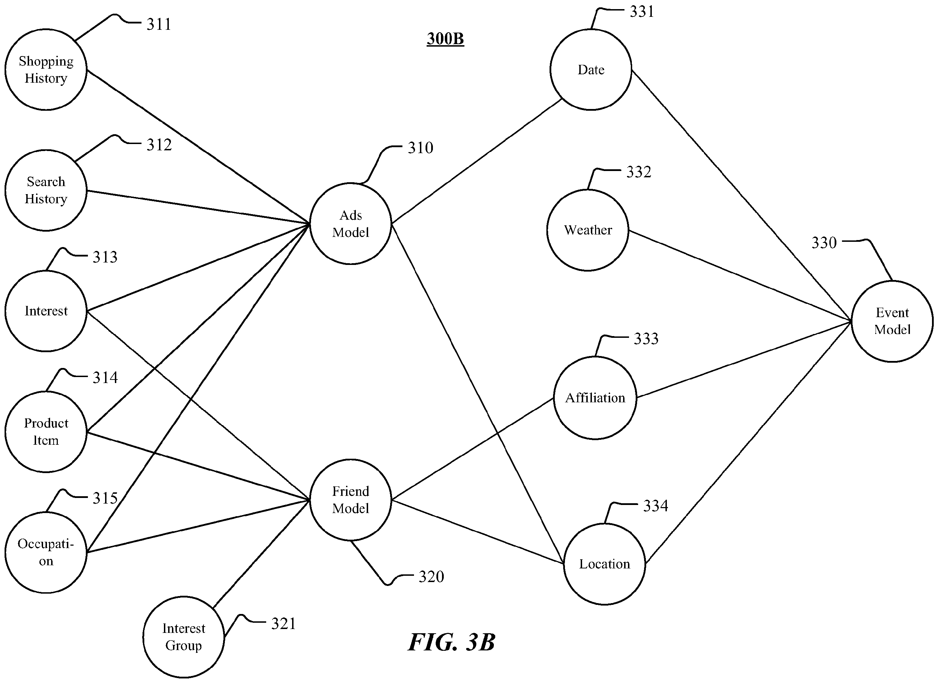

**FIG. 3B** illustrates an example process 300B for generating and integrating new nodes to the knowledge graph. In particular embodiments, when the feature knowledge graph system receives a new ML model with initial features (e.g., determined based on domain knowledge), the feature knowledge graph system may generate a new node corresponding to the new ML model. The feature knowledge graph system may generate a new node corresponding to each initial feature of the new ML model. The feature knowledge graph system may generate one or more new edges connecting the new node corresponding to the ML model and the new nodes corresponding to the initial features. The new edges may be determined based on domain knowledge associated with the ML model. In particular embodiments, the feature knowledge graph system may determine new correlations or relationships between the new nodes, corresponding to the new ML model and the initial features, and other nodes in the knowledge graph. The system may generate new edges to represent these new correlations or relationships. The feature knowledge graph system may integrate these new nodes and new edges into the knowledge graph based on these new correlations.

As an example and not by way of limitation, the feature knowledge graph system may receive a ML model for friend recommendation (i.e., friend model) which is associated with a number of initial features (e.g., interest, product item, occupation, interest group, affiliation, location) as determined based on related domain knowledge. The system may receive the new model and the initial features through APIs from another computing system or from user inputs. In particular embodiments, the system may generate a new model node for the received friend model 320 and generate a new feature node for each initial feature (e.g., interest group 321) that does not exist in the knowledge graph. Then, the system may generate a new edge to connect the new node for the friend model 320 to each new feature node (e.g., interest group 321). Since some initial features (e.g., interest 313, product item 314, occupation 315, affiliation 333, location 334) are already in the knowledge graph 300B, the system may not need to generate new nodes for these initial features. Instead, the system may connect the new node of the friend model 320 directly to the corresponding existing nodes (e.g., interest 313, product item 314, occupation 315, affiliation 333, location 334). In particular embodiments, the system may generate a new node for the new friend model 320 and generate a new node for each of the initial features. The system may merge some of the initial features into the exiting features during a clustering and merging process. In particular embodiments, the system may use a machine-learning algorithm to simplify the logic for building knowledge graphs. It is notable that the models and features in FIG. 3A-3G in this disclosure are used for the purpose of explaining the systems, methods, principles, and processes as described in this disclosure. The systems, methods, principles, and processes as described in this disclosure may employ a privacy-aware process (e.g., privacy-aware machine-learning) to protect users' privacy information. During any steps, the system may only use the information that is in public-domain or information that has been approved by users (e.g., through "access setting").

In particular embodiments, the feature knowledge graph system may update the knowledge graph dynamically based on new knowledge (e.g., relationships) that is learned through graph learning, subsequently received from other computing systems, or subsequently received from user inputs. As an example and not by way of limitation, the system may identify one or more new correlations through graph learning and may generate one or more new edges to represent the new correlations. As another example, the system may receive new domain knowledge from subsequent user inputs or from another computing system and may generate new edges based on the new domain knowledge. As another example, the system may merge two or more feature nodes representing the same or similar features into one node and update the knowledge graph accordingly. As another example, the system may adjust the weights of the edges based on the inference values received from user inputs or from applications to which the corresponding models and features are deployed.

In particular embodiments, an edge in the knowledge graph may be associated with one or more properties for characterizing the represented relationships. For example, the system may determine and assign a weight to each edge to indicate the relevant level of the two nodes connected by that edge. As another example, the system may determine and assign one or more properties to an edge to indicate a similarity level between two models or between two features corresponding to the nodes connected by that edge. The similarity level between two models may be determined based on, for example, model types, shared features, shared problem domains, discovered relationships through graph learning, locations and distances in the knowledge graph, user inputs indicating the similarity, etc. The similarity level between two features may be determined based on feature categories, feature clustering results (e.g., based on feature tags in an *N*-dimensional space corresponding to *N* number of tags), tags, associated models, locations and distances in the *N*-dimensional space defined by *N* number of tags, locations and distances in the knowledge graph, etc. In particular embodiments, the distance between two nodes in the knowledge graph may be determined based on the number of edges between these two nodes and corresponding weights associated with these edges. A distance between two nodes in the knowledge graph may indicate a relevance level or correlation level between the two nodes.

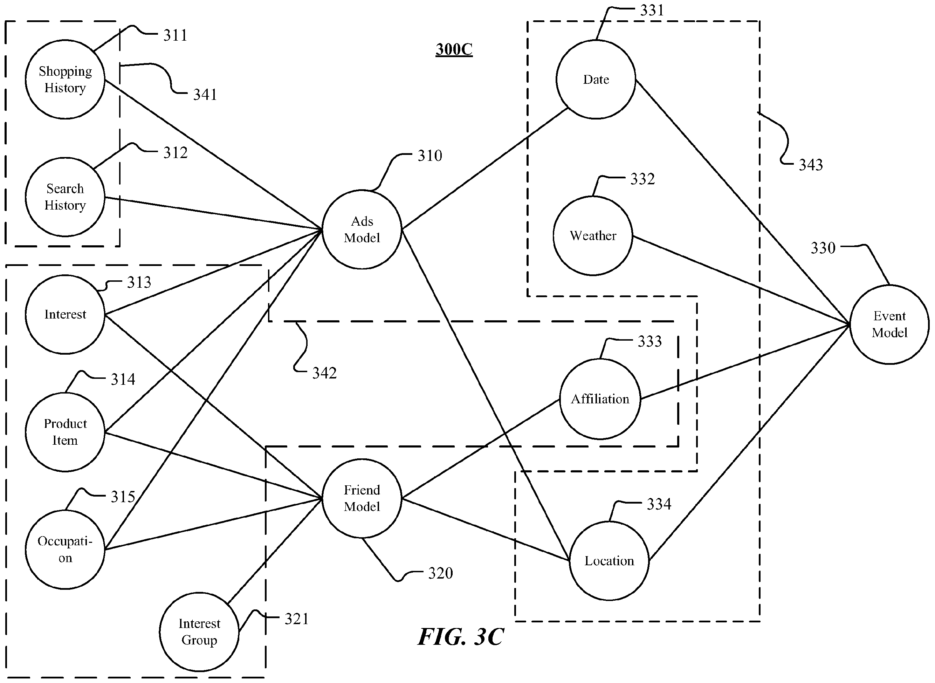

**FIG. 3C** illustrates an example process 300C for clustering features in a knowledge graph based on corresponding tags associated with these features. In particular embodiments, the feature knowledge graph system may cluster the features and models in the knowledge graph based on the tags associated with these features and models. In particular embodiments, the system may determine and assign one or more feature tags to each feature in the knowledge graph. The feature tags for a feature may be determined based on one or more properties or attributes of that feature. A feature tag may represent a property or an attribute of the associated feature in the feature repository (including online features that are generated on the fly and offline features that are static data sets). In particular embodiments, the system may determine and assign one or more model tags to each model in the knowledge graph. The model tags for a model may be determined based on one or more properties or attributes of that model. A model tag may present a property or an attribute of the associated model.

In particular embodiments, the system may define an *N*-dimensional space based on the N number of tags associated with the features on the graph. The system may use a cluster algorithm or machine-learning model (e.g., trained with supervised or unsupervised training process) to cluster the features into a number of feature categories in the *N*-dimensional space. For example, the system may determine the locations of the features in the *N*-dimensional space and cluster the features that are close to each other (e.g., being within a threshold distance) in the *N*-dimensional space into a same feature category. As another example, the system may cluster features sharing one or more feature tags into a same feature category. As another example, the system may cluster features that are associated many same-type models (e.g., greater than a threshold) into a same feature category. In particular embodiments, the system may cluster the features into respective feature categories based on one or more shared tags. As illustrated in FIG. 3C, the features of shopping history 311 and search history 312 may both have a feature tag "#behavior" and may be clustered into a behavior category 341. The features of interest 313, product item 314, occupation 315, interest group 321, affiliation 333, and location 334 may all have a feature tag "#person" and may be clustered into a feature category for person information 342. The features of date 311, weather 332, affiliation 333, and location 334 may all have a tag "#event" and may be clustered into a feature category for events 343.

In particular embodiments, the knowledge graph may include a large number of features some of which may be redundant. In particular embodiments, the system may access the features in the knowledge graph (e.g., using a random walk or deep walk), cluster the features into a number of feature categories or feature groups, and merge the similar features or similar feature groups to reduce the feature number and simplify the knowledge graph. For example, the interest feature 313 in FIG. 3C may be input to the system with both the Ads model 310 and the friend model 320 and may be merged to one feature node to reduce the redundancy and simplify the knowledge graph. As another example, a feature group related to football events may be identified to be similar to a feature group related to soccer events and may be merged into a single feature group related to sport events.

In particular embodiments, the system may define an *N*-dimensional space based on the N number of tags associated with the models. The system may use a cluster algorithm or machine-learning model (e.g., trained with supervised or unsupervised training process) to cluster the models into a number of model categories or model groups in the *N*-dimensional space. The system may determine the locations of the models in the *N*-dimensional space and cluster the models that are close to each other (e.g., being within a threshold distance) in the *N*-dimensional space into a same model category or model group. In particular embodiments, the system may cluster models based on shared tags. As an example, the system may cluster models sharing one or more model tags into a same model category or group. As another example, the system may cluster models that share many features (e.g., greater than a threshold) into a same model category or model group. As another example, the system may cluster models that are within the same problem domain into a same model category or model group.

In particular embodiments, the knowledge graph may include a large number of models some of which may be redundant. In particular embodiments, the system may access the models in the knowledge graph (e.g., using a random walk or deep walk), cluster the models into a number of model categories or model groups, and merge the similar models or similar model groups to reduce the model number and simplify the knowledge graph. As an example, the system may receive another Ads model (not shown) that is very similar to the Ads model 310. Instead of generating a new node for the new Ads model, the system may merge the new Ads model to the existing Ads model 310 to reduce the redundancy and simplify the knowledge graph. As another example, the system may identify multiple model groups related to Ads recommendation and may merge these model groups into a single model group or a single model for Ads recommendation to reduce the redundancy and simplify the knowledge graph.

In particular embodiments, the feature knowledge graph system may determine new relationships between two nodes corresponding to a model-model pair, a feature-feature pair, or a model-feature pair based on new knowledge learned through graph learning. In particular embodiments, the system may use graph learning to determine new relationships based on graph relationships and one or more rules (as described later) for determining relationships. In particular embodiments, the system may use a machine-learning model (e.g., a convolutional neural network, a graph neural network) to identify the hidden relationships between the nodes. The system may update the knowledge graph by generating one or more new edges to represent the new relationships in the knowledge graph. The system, when queried about a particular ML model, may recommend new features for that particular ML model based on the new relationships and new knowledge learned through graph learning.

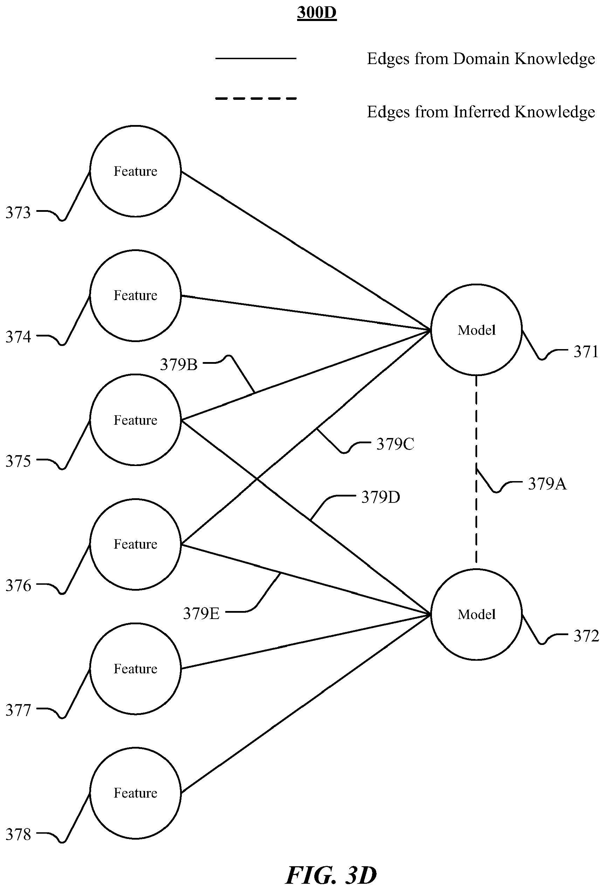

**FIG. 3D** illustrates an example knowledge graph 300D including two models with shared features. In particular embodiments, the feature knowledge graph system may identify a correlation between a first ML model and a second ML model based on one or more shared features by the first and second ML models. As an example and not by way of limitation, the knowledge graph 300D may include a first model 371 and a second model 372. The first model 371 may be associated with a number of features including the features 373, 374, 375, and 376 as determined based on domain knowledge associated with the first model 371. The second model 372 may be associated with a number of features including the features 375, 376, 377, and 378 as determined based on the domain knowledge associated with the second model 372. The system may identify a correlation or relationship between the that the first model 371 and the second model 372 based on a determination that the first model 371 and the second model 373 share the features 375 and 376. The system may generate a new edge 379A to connect the first model 371 and the second model 372 to represent the correlation or relationship between these two models. In particular embodiments, the system may determine a correlation metric indicating a correlation level between the first model 371 and the second model 372 and assign the correlation metric to the new edge 379A. As an example and not by way of limitation, the correlation metric may be determined based on one or more factors including, for example, but not limited to, number of features or percentage of features that are shared by the two models, corresponding weights of edges (e.g., 379B, 379C, 379D, 379E) associated with the shared features (indicating importance levels of the related features), distances of other non-shared features in a *N*-dimensional tag space, a distance of the two models in a *N*-dimensional tag space, etc.

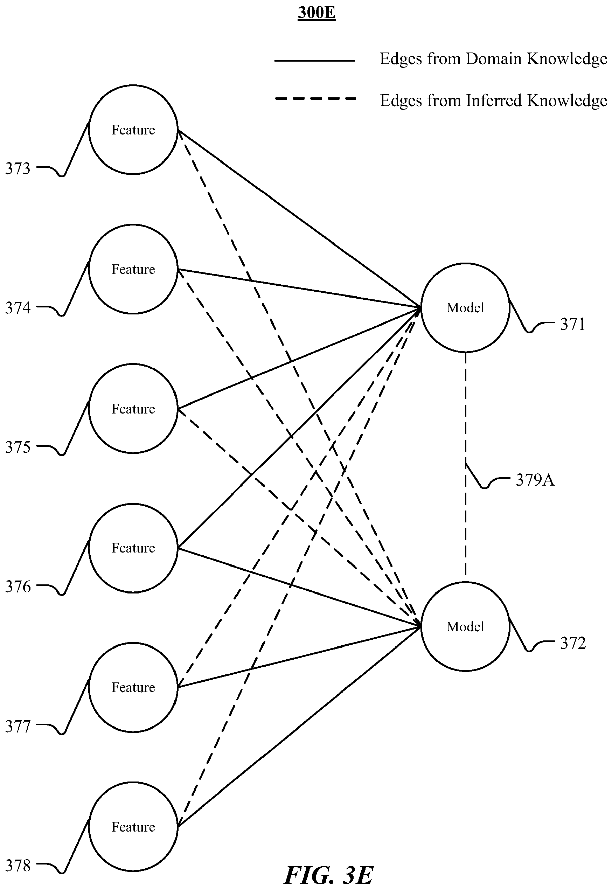

**FIG. 3E** illustrates an example knowledge graph 300E used for recommending features for correlated models. In particular embodiments, the feature knowledge graph system may recommend features to a first ML model based on the features associated with a second ML model which is correlated to the first ML model. As an example and not by way of limitation, the system may determine that the model 371 and the model 372 have a relationship as characterized by the edge 379A and the associated weights or correlation metrics. In particular embodiments, the relationship between the model 371 and the model 372 may be determined based on the shared features (e.g., 375 and 376) and associated edges with weights. In particular embodiments, the relationship between the model 371 and the model 372 may be determined based on a determination that the two models are associated with the same problem domain, applications, tags, etc. The system may determine the correlation metrics associated with the features 373 and 374 with respect to the model 372 and compare the correlation metrics to one or more pre-determined criteria. In response to a determination that the correlation metrics meet the one or more pre-determined criteria, the system may recommend the features 373 and 374 for the model 372. The system may generate corresponding edges to represent these relationships. Similarly, the system may determine the correlation metrics associated with the features 377 and 378 with respect to the model 371 and compare the correlation metrics to one or more pre-determined criteria. In response to a determination that the correlation metrics meet the one or more pre-determined criteria, the system may recommend the features 377 and 378 for the model 371. The system may generate new edges to represent this relationship. In particular embodiments, the correlation metrics may be determined based on one or more factors including, for example, but not limited to, weights of corresponding edges, distances in a *N*-dimensional tag space, distances in the graph, etc.

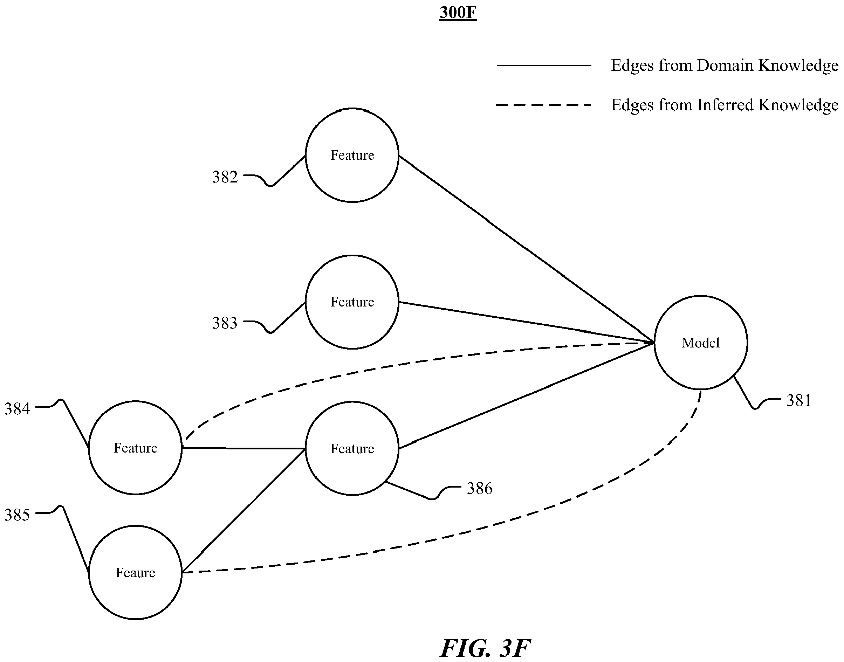

**FIG. 3F** illustrates an example knowledge graph 300F including embedded sub-graphs. In particular embodiments, the knowledge graph may include a number of embedded sub-graphs corresponding to different layers of features or knowledge graphs in different sub-problem domains. In particular embodiments, the feature knowledge graph system may divide data and features into different layers, for example, but not limited to, a fundamental data layer (preprocessing raw data), a generic feature layer, a domain feature layer, an application feature layer, etc. In particular embodiments, the system may include a feature sharing mechanism (e.g., a feature store) which allows features of particular layers to be reused by in other layers and allow features of particular problem domains to be reused for other problem domains. In particular embodiments, the system may recommend features to a queried ML model based on features of different layers. As an example and not by way of limitation, the knowledge graph 300F may include a model 381 and a number of associated features (e.g., 382, 383, and 386). The feature 386 may be associated with two features 384 and 385 which are at a lower feature layer with respect to the feature 386. The system may determine a correlation metric for each of the features 384 and 385 with respect to the model 381 and compare the determined correlation metrics to one or more pre-determined criteria. In response to a determination that the correlation metrics meet the one or more pre-determined criteria, the system may generate new edges connecting the features 384 and 386 to the mode 381 to represent these relationships. As another example and not by way of limitation, the model node 381 may include a sub-graph (not shown) corresponding a number of models in respective sub-domains. For a particular model in a sub-domain, the system may determine the correlation metrics of the features 382 and 383 with respect to that particular sub-domain model and compare the correlation metrics to one or more pre-determined criteria. In response to a determination that the correlation metrics meet the pre-determined criteria, the system may correlate the features 382 and 383 to that particular sub-domain model (not shown).

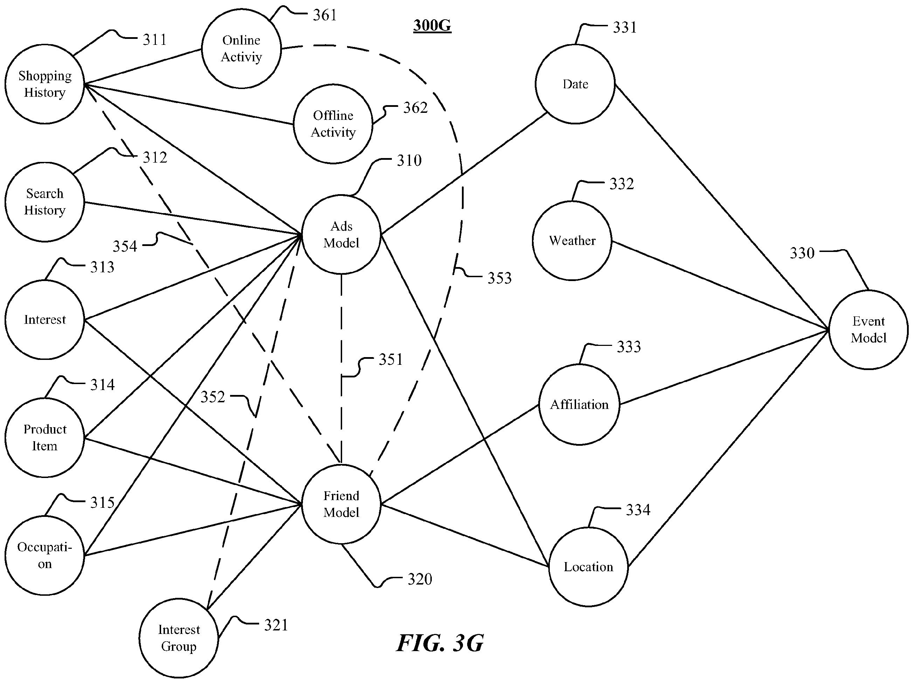

**FIG. 3G** illustrates an example knowledge graph 300G used for recommending features for ML models. As an example and not by way of limitation, the system may determine that the Ads model 310 and the friend model 320 are correlated with each other based on the fact that they share the same features of 313, 314, and 315. The system may generate a new edge 351 to represent the relationship between the Ads model 310 and the friend model 320. The new edge 351 may be associated with one or more weights characterizing the represented relationship. The system may determine a correlation metric for the features 321 respect to the model 310 and compare the determined correlation metric to one or more pre-determined criteria (e.g., pre-determined thresholds). In response to a determination that the correlation metric meets the one or more pre-determined criteria, the system may recommend the feature 321 for the model 310. The system may generate a new edge 352 to represent the relationship between the feature 321 and the model 310 and assign one or more weights including the corresponding correlation metric to the new edge 352.

As an example and not by way of limitation, the system may determine that the Ads model 310 and the friend model 320 are correlated with each other based on the fact that they share the same features of 313, 314, and 315. The system may generate a new edge 351 to represent the relationship between the Ads model 310 and the friend model 320. The new edge 351 may be associated with one or more weights characterizing the represented relationship. The shopping history feature 311 may be associated with the Ads model 310 and may have a sub-graph including a number of features at a lower feature layer (e.g., online activity 361, offline activity 362). The system may determine a correlation metric for the features 311 with respect to the model 320 and compare the determined correlation metric to one or more pre-determined criteria. In response to a determination that the correlation metric meets the one or more pre-determined criteria, the system may recommend the feature 311 for the model 320. The system may generate a new edge 354 to represent the relationship between the feature 311 and the model 320 and assign one or more weights including the corresponding correlation metric to the new edge 354. Then, the system may determine a correlation metric for the features 361 (which is a sub-layer feature to 311) with respect to the model 320 and compare the determined correlation metric to one or more pre-determined criteria. In response to a determination that the correlation metric meets the one or more pre-determined criteria, the system may recommend the feature 361 for the model 320. The system may generate a new edge 353 to represent the relationship between the feature 361 and the model 320 and assign one or more weights including the corresponding correlation metric to the new edge 353. The system may determine a correlation metric for the features 362 (which is a sub-layer feature to 311) with respect to the model 320 and compare the determined correlation metric to one or more pre-determined criteria. In response to a determination that the correlation metric does not meet the one or more pre-determined criteria, the system may not recommend the feature 362 for the model 320.

In particular embodiments, the feature knowledge graph system may determine whether to recommend a feature for a ML model based on a correlation metric between that feature and that ML model. The correlation metric may indicate a correlation or relevance level between the associated feature and model. In particular embodiments, the system may determine the correlation metric based on direct graph relationships (e.g., models with shared features, models of the same or similar problem domain, features of the same category or group, feature of the same layers, features of the same sub-graph, etc.). In particular embodiments, the system may determine the correlation metric based on indirect relationships between two nodes corresponding to a feature-feature pair, a feature-model pair, or a model-model pair. Some nodes in the knowledge graph that have no obvious graph relationships may nevertheless have hidden relationships and may be correlated indirectly. The system may discover these hidden or indirect relationships through graph learning. For example, the system may calculate a distance between a first node and a second node in a *N*-dimensional tag space and determine the corresponding correlation metric based on the distance in this *N*-dimensional tag space. As another example, the system may calculate a distance between a first node and a second node in the knowledge graph based on the number of edges between these nodes and the weights of these edges. The system may determine the corresponding correlation metric based on the distance of these two nodes in the knowledge graph. As another example, the system may determine a characterizing vector for a first node (corresponding to a feature or a model) and a second node (corresponding to a feature or model). The characterizing vector may include a number of characterizing elements (e.g., tags, properties, attributes). The system may determine the correlation metric of these two nodes based on the two characterizing vectors. In particular embodiments, the system may use a graph neural network to identify these indirect or hidden relationships.

In particular embodiments, the knowledge graph may include a large number of ML models and a large number of features. The models may be complex models, such as, multi-layer models, multi-tower models, multi-task models, multi-stage models, etc. The relationships between the models and the features may become very complex and may be hidden behind many layers of data and information in the knowledge graph. In particular embodiments, the feature knowledge graph system may use a machine-learning models (e.g., a graph neural network or a convolutional neural network) to identify the hidden correlations in the knowledge graph and determine corresponding correlation metrics. In particular embodiments, the graph neural network (GNN) may be trained using generated training samples (e.g., with pre-labeled correlations by human experts) to identify the hidden correlations or relationships in the knowledge graph. During the training process, the whole knowledge graph may be used to generate the training samples. The system may use a deep walk or random walk process to access the nodes in the graph. Each node may have number of paths on the graphs. These paths may be used as sampling of the graph to represent the sampling structure information of the graph. Each path may have a sliding window for a neighboring area. The nodes that are within a sliding window may be labeled as being similar to each other. The nodes that are far away from each other could be labeled as being different from each other. The system may generate both positive samples and negative sample and feed these samples to GNN to train the GNN to identify relationships. At run time, the system may feed the feature and model information (e.g., feature tags, model tags, nodes, edges, weights, attributes) to the GNN which may identify the hidden relationships and determine corresponding correlation metrics in the knowledge graph. The identified relationships may be used as basis for feature engineering of ML models.

In particular embodiments, the feature knowledge graph system may be queried by users to provide inference services of recommending features for ML models. The system may receive query information (e.g., from a user input or an API input) associated with a particular ML model. The system may access the knowledge graph that defines relationships between a number of ML models and a number of features associated with these ML models. The system may determine, based on the knowledge graph and the query information, one or more correlation metrics indicating correlations between that particular ML model and one or more features in the knowledge graph. The system may determine one or more recommended features for the machine-learning model based on the one or more correlation metrics and the one or more features. In particular embodiments, the ML model being queried may have one or more initial features. The recommended features may be other features added to the ML model in addition to the initial features. In particular embodiments, one or more the initial features may be removed from the ML model or/and replaced by corresponding newly recommended features.

In particular embodiments, the query information is related to a new ML model that is not included in the knowledge graph. In particular embodiments, the system may identify an existing model in the knowledge graph that is similar to the new ML model and recommend features for the new ML model based on that existing model in the knowledge graph. The existing model that is similar to the new ML model may be identified based on, for example, but not limited to, a shared problem domain, a shared application, one or more shared features, a distance in an *N*-dimensional tag space, a shared input/out pattern, a shared mathematical principle, etc. In particular embodiments, the system may import and integrate the new ML model into the knowledge graph. The system may generate a new node for the new ML model and each of its initial features and integrate these new nodes to the knowledge graph. Then, the system may use graph learning to identify new correlations or relationships between the new ML model and other features/models in the knowledge graph. The system may update the knowledge graph by generating and integrating new edges based on the new relationships. The system may determine correlation metrics of one or more features in the knowledge graph with respect to the new ML model and compare these correlation metrics to one or more pre-determined criteria. In response to a determination that these correlation metrics meet the pre-determined criteria, the system may recommend the one or more features for the new ML model.

In particular embodiments, the feature knowledge graph system may receive inference values indicating the importance or effectiveness of model inference in the applications. The system may evaluate features and models based on the inference values. In particular embodiments, the inference values may include model preformation information including for example, but not limited to, inference results, exposure rates, click-through rates, conversion rates, prediction precision, etc. As an example and not by way of limitation, the system may recommend one or more features for a ML model using graph learning based on the knowledge graph. The ML model with these recommended features may be deployed to an application for recommending Ads for users of a social network platform. The application may track a number of performance parameters (e.g., click-through rates, exposure rates, conversion rates, prediction precisions, revenue per impression, conversion per impression) of the recommended Ads and determine the corresponding inference values indicating the performance level of the ML model with these features. Then, the application may send these inference values to the feature knowledge graph system which, after receiving the inference values, may evaluate the model with these features based on the received inference values. After that, the feature knowledge graph system may adjust one or more weights of corresponding edges of the knowledge graph based on the inference value metrics and the model/feature evaluation result. For example, when the ML model provides a high prediction precision (e.g., higher than a pre-determined threshold) associated with high conversion rates or click-through rates, the system may cause the corresponding edges representing the relationships between these features and the corresponding ML model to have greater weight values indicating a higher level of relevance or importance. Otherwise, when the ML model with these features provides a low prediction precision (e.g., lower than a pre-determined threshold) associated with low conversion rates or low click-through rates, the system may cause the corresponding edges representing the relationships between these features and the ML model to have smaller weight values indicating a lower level of relevance or importance. By feeding the inference values to the system and using the inference values to evaluate models and features and adjust corresponding weights, the system may cause the knowledge graph to more effectively recommend high quality features for future ML models.

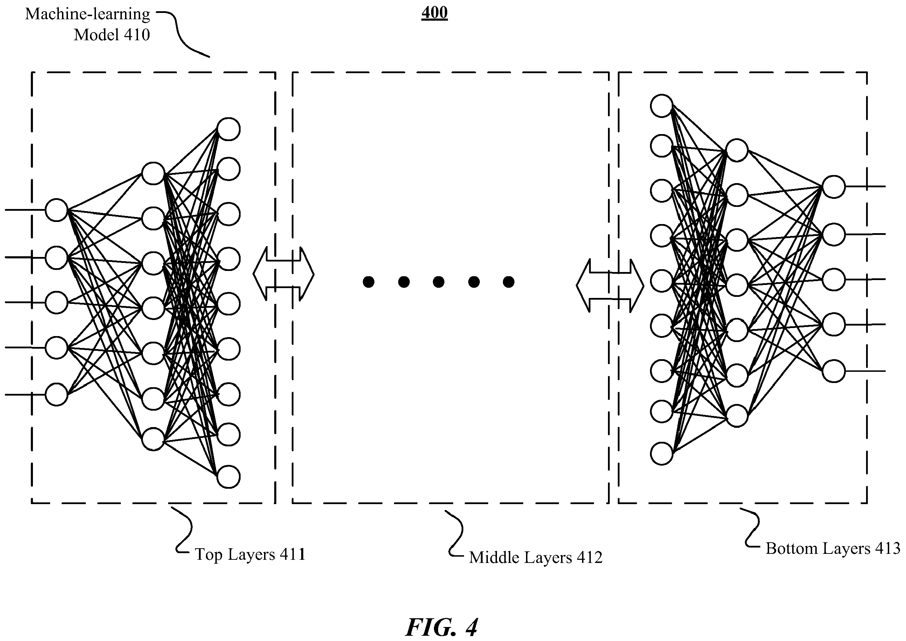

**FIG. 4** illustrates an example process 400 for using transfer learning for feature engineering. In particular embodiments, the feature knowledge graph system may allow previous ML models or some layers of previous ML Models to be reused in different applications of the same, similar, or different problem domains based on transfer learning. Transfer learning may be a mechanism of machine learning for reusing the existing models by applying new domain knowledge in some layers of the models. In particular embodiments, the system may use transfer learning as a way of feature engineering. With the knowledge graph, the system may allow the sharing layers of the ML models to become more descriptive and more relevant by tagging the related features. The system may help to determine the layer design in transfer learning based on the feature and domain knowledge. In particular embodiments, the system may allow transfer learning for the models to be extended. For example, an existing English-to-Chinese translator model may be extended to an English-to-Japanese translator model, a German-to-Chinese translator model, etc. Using the knowledge graph, the system may help to select the feature sets of different layers to be effectively applied to other problem domains. As an example and not by way of limitation, the ML model 410 may be a deep learning model with many layer (e.g., 100 layers) for translating French to English. The system may be queried for recommending features for another deep learning model for translating French to German. The system may use a knowledge graph to determine the layers of features (e.g., middle layers 412) that should be directed transferred to the new model and the layers of features (e.g., top layers 411 and bottom layers 413) that should be adjusted based on the new domain knowledge. The system may use the knowledge graph to determine how many layers and which set of features to be included in the top layers 411 and the bottom layers 413 that need to be adjusted based on the new domain knowledge (e.g., translating French to German). The system may use the knowledge graph to determine how many layers and which set of features to be included in the middle layers 411 that could be directed reused for translating French to German.

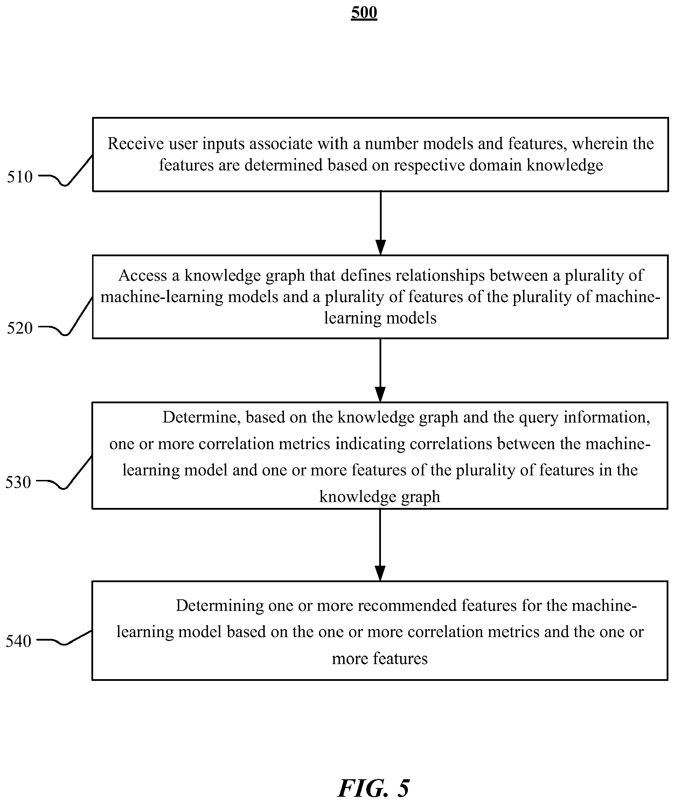

**FIG. 5** illustrates an example method 500 of using a knowledge graph to recommend features for machine-learning models. The method may begin at step 510, where a computing system may receive query information associated with a machine-learning model. At step 520, the system may access a knowledge graph that defines relationships between a number of machine-learning models and a number of features of the machine-learning models. At step 530, the system may determine, based on the knowledge graph and the query information, one or more correlation metrics indicating correlations between the machine-learning model and one or more features of the features in the knowledge graph. At step 540, the system may determine one or more recommended features for the machine-learning model based on the one or more correlation metrics and the one or more features. In particular embodiments, the knowledge graph may include a number of nodes and a number of edges connecting these nodes. The nodes may correspond to a number of machine-learning models and a number of features of these machine-learning models. In particular embodiments, each of the features may be associated with one or more machine-learning models based on associated domain knowledge or inferred correlations as determined based on the knowledge graph. In particular embodiments, each of the edges in the knowledge graph may connect two associated nodes in the knowledge graph. Each edge may be associated with a weight for characterizing a relationship between the two associated nodes.

In particular embodiments, the system may generate, for the knowledge graph, a first new node corresponding to the machine-learning model. The system may generate, for the knowledge graph, one or more second new nodes corresponding to one or more initial features of the machine-learning model. The system may generate, for the knowledge graph, one or more new edges connecting the first new node to the one or more second new nodes. The one or more new edges may be determined based on domain knowledge associated with the machine-learning model. In particular embodiments, the system may determine one or more new correlations of the first new node and the one or more second new nodes with respect to the nodes in the knowledge graph. The system may integrate the first new node and the one or more second new nodes into the knowledge graph based on the one or more new correlations. In particular embodiments, the one or more correlation metrics may be determined based on one or more graph relationships between the first new node and one or more nodes corresponding to the one or more features. In particular embodiments, the one or more correlation metrics may be determined based on one or more graph relationships between the first new node and one or more nodes corresponding to one or more machine-learning models of the machine-learning models. The one or more features may be associated with the one or more machine-learning models. In particular embodiments, the machine-learning model may share one or more features with the one or more machine-learning models of the knowledge graph. In particular embodiments, the machine-learning model may share a problem domain with the one or more machine-learning models of the knowledge graph.

In particular embodiments, each of the machine-learning models may be associated with one or more tags for characterizing that machine-learning model. The machine-learning model may be associated with one or more initial features. The system may determine one or more new tags for the received machine-learning model and each initial feature of the received machine-learning model. In particular embodiments, the system may cluster the one or more initial features of the received machine-learning model and the features in the knowledge graph into a number of feature categories in a *N*-dimensional space as defined by N number of tags. In particular embodiments, the system may merge one or more of the initial features and one or more of the features based on associated feature categories. In particular embodiments, the one or more recommended features may be associated with a feature category. The feature category may be associated with an initial feature of the received machine-learning model. In particular embodiments, the one or more correlation metrics may be determined by a graphic neural network. The graphic neural network may identify one or more hidden correlations in the knowledge graph. The one or more correlation metrics may be determined based on the one or more hidden correlations in the knowledge graph identified by the graphic neural network. In particular embodiments, the system may generate a new edge corresponding to each hidden correlation identified by the graphic neural network. The system may update the knowledge graph based on the generated new edges. In particular embodiments, the system may receive one or more inference value metrics associated with the machine-learning model with the one or more recommended features. In particular embodiments, the one or more inference value metrics may include performance parameters of the machine-learning model with the one or more recommended features. The system may evaluate the one or more recommended features for the machine-learning model based on the received one or more inference value metrics. In particular embodiments, the system may adjust one or more weights of one or more corresponding edges of the knowledge graph based on the one or more inference value metrics.

Particular embodiments may repeat one or more steps of the method of FIG. 5, where appropriate. Although this disclosure describes and illustrates particular steps of the method of FIG. 5 as occurring in a particular order, this disclosure contemplates any suitable steps of the method of FIG. 5 occurring in any suitable order. Moreover, although this disclosure describes and illustrates an example method for using a knowledge graph to recommend features for machine-learning models including the particular steps of the method of FIG. 5, this disclosure contemplates any suitable method for using a knowledge graph to recommend features for machine-learning models including any suitable steps, which may include all, some, or none of the steps of the method of FIG. 5, where appropriate. Furthermore, although this disclosure describes and illustrates particular components, devices, or systems carrying out particular steps of the method of FIG. 5, this disclosure contemplates any suitable combination of any suitable components, devices, or systems carrying out any suitable steps of the method of FIG. 5.

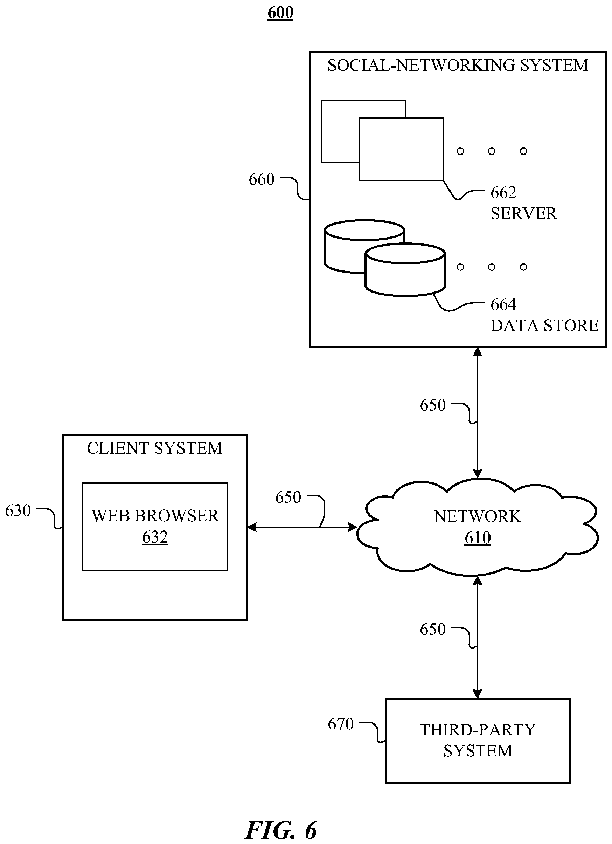

**FIG. 6** illustrates an example network environment 600 associated with a social-networking system. Network environment 600 includes a client system 630, a social-networking system 660, and a third-party system 670 connected to each other by a network 610. Although FIG. 6 illustrates a particular arrangement of client system 630, social-networking system 660, third-party system 670, and network 610, this disclosure contemplates any suitable arrangement of client system 630, social-networking system 660, third-party system 670, and network 610. As an example and not by way of limitation, two or more of client system 630, social-networking system 660, and third-party system 670 may be connected to each other directly, bypassing network 610. As another example, two or more of client system 630, social-networking system 660, and third-party system 670 may be physically or logically co-located with each other in whole or in part. Moreover, although FIG. 6 illustrates a particular number of client systems 630, social-networking systems 660, third-party systems 670, and networks 610, this disclosure contemplates any suitable number of client systems 630, social-networking systems 660, third-party systems 670, and networks 610. As an example and not by way of limitation, network environment 600 may include multiple client system 630, social-networking systems 660, third-party systems 670, and networks 610.

This disclosure contemplates any suitable network 610. As an example and not by way of limitation, one or more portions of network 610 may include an ad hoc network, an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, or a combination of two or more of these. Network 610 may include one or more networks 610.

Links 650 may connect client system 630, social-networking system 660, and third-party system 670 to communication network 610 or to each other. This disclosure contemplates any suitable links 650. In particular embodiments, one or more links 650 include one or more wireline (such as for example Digital Subscriber Line (DSL) or Data Over Cable Service Interface Specification (DOCSIS)), wireless (such as for example Wi-Fi or Worldwide Interoperability for Microwave Access (WiMAX)), or optical (such as for example Synchronous Optical Network (SONET) or Synchronous Digital Hierarchy (SDH)) links. In particular embodiments, one or more links 650 each include an ad hoc network, an intranet, an extranet, a VPN, a LAN, a WLAN, a WAN, a WWAN, a MAN, a portion of the Internet, a portion of the PSTN, a cellular technology-based network, a satellite communications technology-based network, another link 650, or a combination of two or more such links 650. Links 650 need not necessarily be the same throughout network environment 600. One or more first links 650 may differ in one or more respects from one or more second links 650.

In particular embodiments, client system 630 may be an electronic device including hardware, software, or embedded logic components or a combination of two or more such components and capable of carrying out the appropriate functionalities implemented or supported by client system 630. As an example and not by way of limitation, a client system 630 may include a computer system such as a desktop computer, notebook or laptop computer, netbook, a tablet computer, e-book reader, GPS device, camera, personal digital assistant (PDA), handheld electronic device, cellular telephone, smartphone, augmented/virtual reality device, other suitable electronic device, or any suitable combination thereof. This disclosure contemplates any suitable client systems 630. A client system 630 may enable a network user at client system 630 to access network 610. A client system 630 may enable its user to communicate with other users at other client systems 630.

In particular embodiments, client system 630 may include a web browser 632, and may have one or more add-ons, plug-ins, or other extensions. A user at client system 630 may enter a Uniform Resource Locator (URL) or other address directing the web browser 632 to a particular server (such as server 662, or a server associated with a third-party system 670), and the web browser 632 may generate a Hyper Text Transfer Protocol (HTTP) request and communicate the HTTP request to server. The server may accept the HTTP request and communicate to client system 630 one or more Hyper Text Markup Language (HTML) files responsive to the HTTP request. Client system 630 may render a webpage based on the HTML files from the server for presentation to the user. This disclosure contemplates any suitable webpage files. As an example and not by way of limitation, webpages may render from HTML files, Extensible Hyper Text Markup Language (XHTML) files, or Extensible Markup Language (XML) files, according to particular needs. Such pages may also execute scripts, combinations of markup language and scripts, and the like. Herein, reference to a webpage encompasses one or more corresponding webpage files (which a browser may use to render the webpage) and vice versa, where appropriate.

In particular embodiments, social-networking system 660 may be a network-addressable computing system that can host an online social network. Social-networking system 660 may generate, store, receive, and send social-networking data, such as, for example, user-profile data, concept-profile data, social-graph information, or other suitable data related to the online social network. Social-networking system 660 may be accessed by the other components of network environment 600 either directly or via network 610. As an example and not by way of limitation, client system 630 may access social-networking system 660 using a web browser 632, or a native application associated with social-networking system 660 (e.g., a mobile social-networking application, a messaging application, another suitable application, or any combination thereof) either directly or via network 610. In particular embodiments, social-networking system 660 may include one or more servers 662. Each server 662 may be a unitary server or a distributed server spanning multiple computers or multiple datacenters. Servers 662 may be of various types, such as, for example and without limitation, web server, news server, mail server, message server, advertising server, file server, application server, exchange server, database server, proxy server, another server suitable for performing functions or processes described herein, or any combination thereof. In particular embodiments, each server 662 may include hardware, software, or embedded logic components or a combination of two or more such components for carrying out the appropriate functionalities implemented or supported by server 662. In particular embodiments, social-networking system 660 may include one or more data stores 664. Data stores 664 may be used to store various types of information. In particular embodiments, the information stored in data stores 664 may be organized according to specific data structures. In particular embodiments, each data store 664 may be a relational, columnar, correlation, or other suitable database. Although this disclosure describes or illustrates particular types of databases, this disclosure contemplates any suitable types of databases. Particular embodiments may provide interfaces that enable a client system 630, a social-networking system 660, or a third-party system 670 to manage, retrieve, modify, add, or delete, the information stored in data store 664.

In particular embodiments, social-networking system 660 may store one or more social graphs in one or more data stores 664. In particular embodiments, a social graph may include multiple nodes-which may include multiple user nodes (each corresponding to a particular user) or multiple concept nodes (each corresponding to a particular concept)-and multiple edges connecting the nodes. Social-networking system 660 may provide users of the online social network the ability to communicate and interact with other users. In particular embodiments, users may join the online social network via social-networking system 660 and then add connections (e.g., relationships) to a number of other users of social-networking system 660 to whom they want to be connected. Herein, the term "friend" may refer to any other user of social-networking system 660 with whom a user has formed a connection, association, or relationship via social-networking system 660.

In particular embodiments, social-networking system 660 may provide users with the ability to take actions on various types of items or objects, supported by social-networking system 660. As an example and not by way of limitation, the items and objects may include groups or social networks to which users of social-networking system 660 may belong, events or calendar entries in which a user might be interested, computer-based applications that a user may use, transactions that allow users to buy or sell items via the service, interactions with advertisements that a user may perform, or other suitable items or objects. A user may interact with anything that is capable of being represented in social-networking system 660 or by an external system of third-party system 670, which is separate from social-networking system 660 and coupled to social-networking system 660 via a network 610.

In particular embodiments, social-networking system 660 may be capable of linking a variety of entities. As an example and not by way of limitation, social-networking system 660 may enable users to interact with each other as well as receive content from third-party systems 670 or other entities, or to allow users to interact with these entities through an application programming interfaces (API) or other communication channels.

In particular embodiments, a third-party system 670 may include one or more types of servers, one or more data stores, one or more interfaces, including but not limited to APIs, one or more web services, one or more content sources, one or more networks, or any other suitable components, e.g., that servers may communicate with. A third-party system 670 may be operated by a different entity from an entity operating social-networking system 660. In particular embodiments, however, social-networking system 660 and third-party systems 670 may operate in conjunction with each other to provide social-networking services to users of social-networking system 660 or third-party systems 670. In this sense, social-networking system 660 may provide a platform, or backbone, which other systems, such as third-party systems 670, may use to provide social-networking services and functionality to users across the Internet.

In particular embodiments, a third-party system 670 may include a third-party content object provider. A third-party content object provider may include one or more sources of content objects, which may be communicated to a client system 630. As an example and not by way of limitation, content objects may include information regarding things or activities of interest to the user, such as, for example, movie show times, movie reviews, restaurant reviews, restaurant menus, product information and reviews, or other suitable information. As another example and not by way of limitation, content objects may include incentive content objects, such as coupons, discount tickets, gift certificates, or other suitable incentive objects.

In particular embodiments, social-networking system 660 also includes user-generated content obj ects, which may enhance a user's interactions with social-networking system 660. User-generated content may include anything a user can add, upload, send, or "post" to social-networking system 660. As an example and not by way of limitation, a user communicates posts to social-networking system 660 from a client system 630. Posts may include data such as status updates or other textual data, location information, photos, videos, links, music or other similar data or media. Content may also be added to social-networking system 660 by a third-party through a "communication channel," such as a newsfeed or stream.

In particular embodiments, social-networking system 660 may include a variety of servers, sub-systems, programs, modules, logs, and data stores. In particular embodiments, social-networking system 660 may include one or more of the following: a web server, action logger, API-request server, relevance-and-ranking engine, content-object classifier, notification controller, action log, third-party-content-object-exposure log, inference module, authorization/privacy server, search module, advertisement-targeting module, user-interface module, user-profile store, connection store, third-party content store, or location store. Social-networking system 660 may also include suitable components such as network interfaces, security mechanisms, load balancers, failover servers, management-and-network-operations consoles, other suitable components, or any suitable combination thereof. In particular embodiments, social-networking system 660 may include one or more user-profile stores for storing user profiles. A user profile may include, for example, biographic information, demographic information, behavioral information, social information, or other types of descriptive information, such as work experience, educational history, hobbies or preferences, interests, affinities, or location. Interest information may include interests related to one or more categories. Categories may be general or specific. As an example and not by way of limitation, if a user "likes" an article about a brand of shoes the category may be the brand, or the general category of "shoes" or "clothing." A connection store may be used for storing connection information about users. The connection information may indicate users who have similar or common work experience, group memberships, hobbies, educational history, or are in any way related or share common attributes. The connection information may also include user-defined connections between different users and content (both internal and external). A web server may be used for linking social-networking system 660 to one or more client systems 630 or one or more third-party system 670 via network 610. The web server may include a mail server or other messaging functionality for receiving and routing messages between social-networking system 660 and one or more client systems 630. An API-request server may allow a third-party system 670 to access information from social-networking system 660 by calling one or more APIs. An action logger may be used to receive communications from a web server about a user's actions on or off social-networking system 660. In conjunction with the action log, a third-party-content-object log may be maintained of user exposures to third-party-content objects. A notification controller may provide information regarding content objects to a client system 630. Information may be pushed to a client system 630 as notifications, or information may be pulled from client system 630 responsive to a request received from client system 630. Authorization servers may be used to enforce one or more privacy settings of the users of social-networking system 660. A privacy setting of a user determines how particular information associated with a user can be shared. The authorization server may allow users to opt in to or opt out of having their actions logged by social-networking system 660 or shared with other systems (e.g., third-party system 670), such as, for example, by setting appropriate privacy settings. Third-party-content-object stores may be used to store content objects received from third parties, such as a third-party system 670. Location stores may be used for storing location information received from client systems 630 associated with users. Advertisement-pricing modules may combine social information, the current time, location information, or other suitable information to provide relevant advertisements, in the form of notifications, to a user.

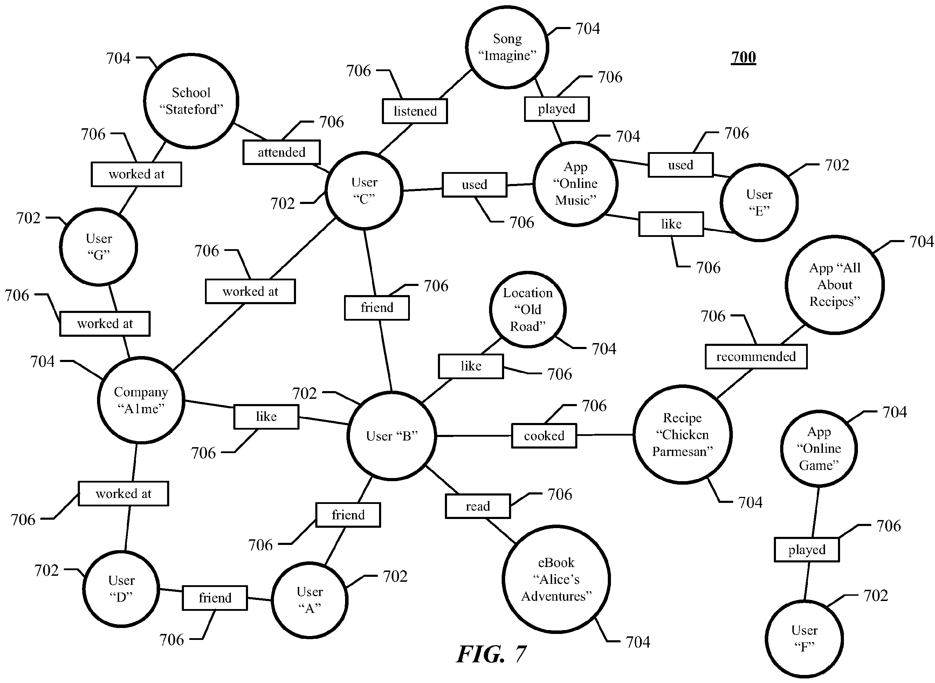

**FIG. 7** illustrates example social graph 700. In particular embodiments, social-networking system 660 may store one or more social graphs 700 in one or more data stores. In particular embodiments, social graph 700 may include multiple nodes-which may include multiple user nodes 702 or multiple concept nodes 704-and multiple edges 706 connecting the nodes. Each node may be associated with a unique entity (i.e., user or concept), each of which may have a unique identifier (ID), such as a unique number or username. Example social graph 700 illustrated in FIG. 7 is shown, for didactic purposes, in a two-dimensional visual map representation. In particular embodiments, a social-networking system 660, client system 630, or third-party system 670 may access social graph 700 and related social-graph information for suitable applications. The nodes and edges of social graph 700 may be stored as data objects, for example, in a data store (such as a social-graph database). Such a data store may include one or more searchable or queryable indexes of nodes or edges of social graph 700.

In particular embodiments, a user node 702 may correspond to a user of social-networking system 660. As an example and not by way of limitation, a user may be an individual (human user), an entity (e.g., an enterprise, business, or third-party application), or a group (e.g., of individuals or entities) that interacts or communicates with or over social-networking system 660. In particular embodiments, when a user registers for an account with social-networking system 660, social-networking system 660 may create a user node 702 corresponding to the user, and store the user node 702 in one or more data stores. Users and user nodes 702 described herein may, where appropriate, refer to registered users and user nodes 702 associated with registered users. In addition or as an alternative, users and user nodes 702 described herein may, where appropriate, refer to users that have not registered with social-networking system 660. In particular embodiments, a user node 702 may be associated with information provided by a user or information gathered by various systems, including social-networking system 660. As an example and not by way of limitation, a user may provide his or her name, profile picture, contact information, birth date, sex, marital status, family status, employment, education background, preferences, interests, or other demographic information. In particular embodiments, a user node 702 may be associated with one or more data objects corresponding to information associated with a user. In particular embodiments, a user node 702 may correspond to one or more webpages.

In particular embodiments, a concept node 704 may correspond to a concept. As an example and not by way of limitation, a concept may correspond to a place (such as, for example, a movie theater, restaurant, landmark, or city); a website (such as, for example, a website associated with social-network system 660 or a third-party website associated with a web-application server); an entity (such as, for example, a person, business, group, sports team, or celebrity); a resource (such as, for example, an audio file, video file, digital photo, text file, structured document, or application) which may be located within social-networking system 660 or on an external server, such as a web-application server; real or intellectual property (such as, for example, a sculpture, painting, movie, game, song, idea, photograph, or written work); a game; an activity; an idea or theory; an object in a augmented/virtual reality environment; another suitable concept; or two or more such concepts. A concept node 704 may be associated with information of a concept provided by a user or information gathered by various systems, including social-networking system 660. As an example and not by way of limitation, information of a concept may include a name or a title; one or more images (e.g., an image of the cover page of a book); a location (e.g., an address or a geographical location); a website (which may be associated with a URL); contact information (e.g., a phone number or an email address); other suitable concept information; or any suitable combination of such information. In particular embodiments, a concept node 704 may be associated with one or more data objects corresponding to information associated with concept node 704. In particular embodiments, a concept node 704 may correspond to one or more webpages.

In particular embodiments, a node in social graph 700 may represent or be represented by a webpage (which may be referred to as a "profile page"). Profile pages may be hosted by or accessible to social-networking system 660. Profile pages may also be hosted on third-party websites associated with a third-party system 670. As an example and not by way of limitation, a profile page corresponding to a particular external webpage may be the particular external webpage and the profile page may correspond to a particular concept node 704. Profile pages may be viewable by all or a selected subset of other users. As an example and not by way of limitation, a user node 702 may have a corresponding user-profile page in which the corresponding user may add content, make declarations, or otherwise express himself or herself. As another example and not by way of limitation, a concept node 704 may have a corresponding concept-profile page in which one or more users may add content, make declarations, or express themselves, particularly in relation to the concept corresponding to concept node 704.

In particular embodiments, a concept node 704 may represent a third-party webpage or resource hosted by a third-party system 670. The third-party webpage or resource may include, among other elements, content, a selectable or other icon, or other inter-actable object (which may be implemented, for example, in JavaScript, AJAX, or PHP codes) representing an action or activity. As an example and not by way of limitation, a third-party webpage may include a selectable icon such as "like," "check-in," "eat," "recommend," or another suitable action or activity. A user viewing the third-party webpage may perform an action by selecting one of the icons (e.g., "check-in"), causing a client system 630 to send to social-networking system 660 a message indicating the user's action. In response to the message, social-networking system 660 may create an edge (e.g., a check-in-type edge) between a user node 702 corresponding to the user and a concept node 704 corresponding to the third-party webpage or resource and store edge 706 in one or more data stores.

In particular embodiments, a pair of nodes in social graph 700 may be connected to each other by one or more edges 706. An edge 706 connecting a pair of nodes may represent a relationship between the pair of nodes. In particular embodiments, an edge 706 may include or represent one or more data objects or attributes corresponding to the relationship between a pair of nodes. As an example and not by way of limitation, a first user may indicate that a second user is a "friend" of the first user. In response to this indication, social-networking system 660 may send a "friend request" to the second user. If the second user confirms the "friend request," social-networking system 660 may create an edge 706 connecting the first user's user node 702 to the second user's user node 702 in social graph 700 and store edge 706 as social-graph information in one or more of data stores 664. In the example of FIG. 7, social graph 700 includes an edge 706 indicating a friend relation between user nodes 702 of user "A" and user "B" and an edge indicating a friend relation between user nodes 702 of user "C" and user "B." Although this disclosure describes or illustrates particular edges 706 with particular attributes connecting particular user nodes 702, this disclosure contemplates any suitable edges 706 with any suitable attributes connecting user nodes 702. As an example and not by way of limitation, an edge 706 may represent a friendship, family relationship, business or employment relationship, fan relationship (including, e.g., liking, etc.), follower relationship, visitor relationship (including, e.g., accessing, viewing, checking-in, sharing, etc.), subscriber relationship, superior/subordinate relationship, reciprocal relationship, non-reciprocal relationship, another suitable type of relationship, or two or more such relationships. Moreover, although this disclosure generally describes nodes as being connected, this disclosure also describes users or concepts as being connected. Herein, references to users or concepts being connected may, where appropriate, refer to the nodes corresponding to those users or concepts being connected in social graph 700 by one or more edges 706. The degree of separation between two objects represented by two nodes, respectively, is a count of edges in a shortest path connecting the two nodes in the social graph 700. As an example and not by way of limitation, in the social graph 700, the user node 702 of user "C" is connected to the user node 702 of user "A" via multiple paths including, for example, a first path directly passing through the user node 702 of user "B," a second path passing through the concept node 704 of company "A1me" and the user node 702 of user "D," and a third path passing through the user nodes 702 and concept nodes 704 representing school "Stateford," user "G," company "A1me," and user "D." User "C" and user "A" have a degree of separation of two because the shortest path connecting their corresponding nodes (i.e., the first path) includes two edges 706.

In particular embodiments, an edge 706 between a user node 702 and a concept node 704 may represent a particular action or activity performed by a user associated with user node 702 toward a concept associated with a concept node 704. As an example and not by way of limitation, as illustrated in FIG. 7, a user may "like," "attended," "played," "listened," "cooked," "worked at," or "watched" a concept, each of which may correspond to an edge type or subtype. A concept-profile page corresponding to a concept node 704 may include, for example, a selectable "check in" icon (such as, for example, a clickable "check in" icon) or a selectable "add to favorites" icon. Similarly, after a user clicks these icons, social-networking system 660 may create a "favorite" edge or a "check in" edge in response to a user's action corresponding to a respective action. As another example and not by way of limitation, a user (user "C") may listen to a particular song ("Imagine") using a particular application (a third-party online music application). In this case, social-networking system 660 may create a "listened" edge 706 and a "used" edge (as illustrated in FIG. 7) between user nodes 702 corresponding to the user and concept nodes 704 corresponding to the song and application to indicate that the user listened to the song and used the application. Moreover, social-networking system 660 may create a "played" edge 706 (as illustrated in FIG. 7) between concept nodes 704 corresponding to the song and the application to indicate that the particular song was played by the particular application. In this case, "played" edge 706 corresponds to an action performed by an external application (the third-party online music application) on an external audio file (the song "Imagine"). Although this disclosure describes particular edges 706 with particular attributes connecting user nodes 702 and concept nodes 704, this disclosure contemplates any suitable edges 706 with any suitable attributes connecting user nodes 702 and concept nodes 704. Moreover, although this disclosure describes edges between a user node 702 and a concept node 704 representing a single relationship, this disclosure contemplates edges between a user node 702 and a concept node 704 representing one or more relationships. As an example and not by way of limitation, an edge 706 may represent both that a user likes and has used at a particular concept. Alternatively, another edge 706 may represent each type of relationship (or multiples of a single relationship) between a user node 702 and a concept node 704 (as illustrated in FIG. 7 between user node 702 for user "E" and concept node 704 for "online music application").

In particular embodiments, social-networking system 660 may create an edge 706 between a user node 702 and a concept node 704 in social graph 700. As an example and not by way of limitation, a user viewing a concept-profile page (such as, for example, by using a web browser or a special-purpose application hosted by the user's client system 630) may indicate that he or she likes the concept represented by the concept node 704 by clicking or selecting a "Like" icon, which may cause the user's client system 630 to send to social-networking system 660 a message indicating the user's liking of the concept associated with the concept-profile page. In response to the message, social-networking system 660 may create an edge 706 between user node 702 associated with the user and concept node 704, as illustrated by "like" edge 706 between the user and concept node 704. In particular embodiments, social-networking system 660 may store an edge 706 in one or more data stores. In particular embodiments, an edge 706 may be automatically formed by social-networking system 660 in response to a particular user action. As an example and not by way of limitation, if a first user uploads a picture, watches a movie, or listens to a song, an edge 706 may be formed between user node 702 corresponding to the first user and concept nodes 704 corresponding to those concepts. Although this disclosure describes forming particular edges 706 in particular manners, this disclosure contemplates forming any suitable edges 706 in any suitable manner.

In particular embodiments, one or more of the content objects of the online social network may be associated with a privacy setting. The privacy settings (or "access settings") for an object may be stored in any suitable manner, such as, for example, in association with the object, in an index on an authorization server, in another suitable manner, or any combination thereof. A privacy setting of an object may specify how the object (or particular information associated with an object) can be accessed (e.g., viewed or shared) using the online social network. Where the privacy settings for an object allow a particular user to access that object, the object may be described as being "visible" with respect to that user. As an example and not by way of limitation, a user of the online social network may specify privacy settings for a user-profile page that identify a set of users that may access the work experience information on the user-profile page, thus excluding other users from accessing the information. In particular embodiments, the privacy settings may specify a "blocked list" of users that should not be allowed to access certain information associated with the object. In other words, the blocked list may specify one or more users or entities for which an object is not visible. As an example and not by way of limitation, a user may specify a set of users that may not access photos albums associated with the user, thus excluding those users from accessing the photo albums (while also possibly allowing certain users not within the set of users to access the photo albums). In particular embodiments, privacy settings may be associated with particular social-graph elements. Privacy settings of a social-graph element, such as a node or an edge, may specify how the social-graph element, information associated with the social-graph element, or content objects associated with the social-graph element can be accessed using the online social network. As an example and not by way of limitation, a particular concept node 704 corresponding to a particular photo may have a privacy setting specifying that the photo may only be accessed by users tagged in the photo and their friends. In particular embodiments, privacy settings may allow users to opt in or opt out of having their actions logged by social-networking system 660 or shared with other systems (e.g., third-party system 670). In particular embodiments, the privacy settings associated with an object may specify any suitable granularity of permitted access or denial of access. As an example and not by way of limitation, access or denial of access may be specified for particular users (e.g., only me, my roommates, and my boss), users within a particular degrees-of-separation (e.g., friends, or friends-of-friends), user groups (e.g., the gaming club, my family), user networks (e.g., employees of particular employers, students or alumni of particular university), all users ("public"), no users ("private"), users of third-party systems 670, particular applications (e.g., third-party applications, external websites), other suitable users or entities, or any combination thereof. Although this disclosure describes using particular privacy settings in a particular manner, this disclosure contemplates using any suitable privacy settings in any suitable manner.

In particular embodiments, one or more servers 662 may be authorization/privacy servers for enforcing privacy settings. In response to a request from a user (or other entity) for a particular object stored in a data store 664, social-networking system 660 may send a request to the data store 664 for the object. The request may identify the user associated with the request and may only be sent to the user (or a client system 630 of the user) if the authorization server determines that the user is authorized to access the object based on the privacy settings associated with the object. If the requesting user is not authorized to access the object, the authorization server may prevent the requested object from being retrieved from the data store 664, or may prevent the requested object from being sent to the user. In the search query context, an object may only be generated as a search result if the querying user is authorized to access the object. In other words, the object must have a visibility that is visible to the querying user. If the object has a visibility that is not visible to the user, the object may be excluded from the search results. Although this disclosure describes enforcing privacy settings in a particular manner, this disclosure contemplates enforcing privacy settings in any suitable manner.

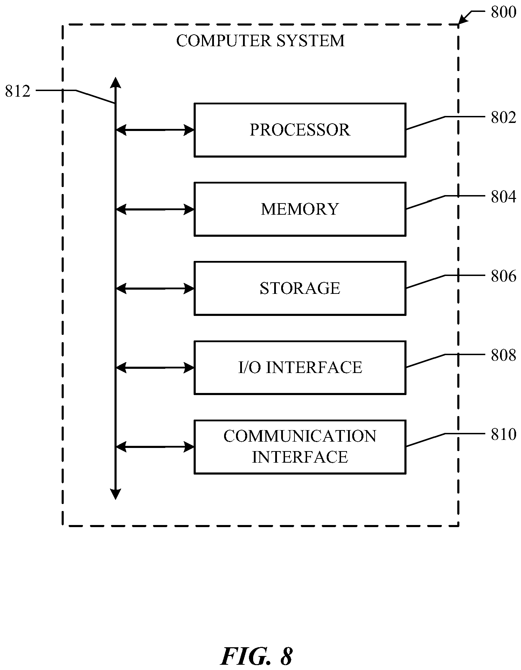

**FIG. 8** illustrates an example computer system 800. In particular embodiments, one or more computer systems 800 perform one or more steps of one or more methods described or illustrated herein. In particular embodiments, one or more computer systems 800 provide functionality described or illustrated herein. In particular embodiments, software running on one or more computer systems 800 performs one or more steps of one or more methods described or illustrated herein or provides functionality described or illustrated herein. Particular embodiments include one or more portions of one or more computer systems 800. Herein, reference to a computer system may encompass a computing device, and vice versa, where appropriate. Moreover, reference to a computer system may encompass one or more computer systems, where appropriate.

This disclosure contemplates any suitable number of computer systems 800. This disclosure contemplates computer system 800 taking any suitable physical form. As example and not by way of limitation, computer system 800 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, an augmented/virtual reality device, or a combination of two or more of these. Where appropriate, computer system 800 may include one or more computer systems 800; be unitary or distributed; span multiple locations; span multiple machines; span multiple data centers; or reside in a cloud, which may include one or more cloud components in one or more networks. Where appropriate, one or more computer systems 800 may perform without substantial spatial or temporal limitation one or more steps of one or more methods described or illustrated herein. As an example and not by way of limitation, one or more computer systems 800 may perform in real time or in batch mode one or more steps of one or more methods described or illustrated herein. One or more computer systems 800 may perform at different times or at different locations one or more steps of one or more methods described or illustrated herein, where appropriate.

In particular embodiments, computer system 800 includes a processor 802, memory 804, storage 806, an input/output (I/O) interface 808, a communication interface 810, and a bus 812. Although this disclosure describes and illustrates a particular computer system having a particular number of particular components in a particular arrangement, this disclosure contemplates any suitable computer system having any suitable number of any suitable components in any suitable arrangement.

In particular embodiments, processor 802 includes hardware for executing instructions, such as those making up a computer program. As an example and not by way of limitation, to execute instructions, processor 802 may retrieve (or fetch) the instructions from an internal register, an internal cache, memory 804, or storage 806; decode and execute them; and then write one or more results to an internal register, an internal cache, memory 804, or storage 806. In particular embodiments, processor 802 may include one or more internal caches for data, instructions, or addresses. This disclosure contemplates processor 802 including any suitable number of any suitable internal caches, where appropriate. As an example and not by way of limitation, processor 802 may include one or more instruction caches, one or more data caches, and one or more translation lookaside buffers (TLBs). Instructions in the instruction caches may be copies of instructions in memory 804 or storage 806, and the instruction caches may speed up retrieval of those instructions by processor 802. Data in the data caches may be copies of data in memory 804 or storage 806 for instructions executing at processor 802 to operate on; the results of previous instructions executed at processor 802 for access by subsequent instructions executing at processor 802 or for writing to memory 804 or storage 806; or other suitable data. The data caches may speed up read or write operations by processor 802. The TLBs may speed up virtual-address translation for processor 802. In particular embodiments, processor 802 may include one or more internal registers for data, instructions, or addresses. This disclosure contemplates processor 802 including any suitable number of any suitable internal registers, where appropriate. Where appropriate, processor 802 may include one or more arithmetic logic units (ALUs); be a multi-core processor; or include one or more processors 802. Although this disclosure describes and illustrates a particular processor, this disclosure contemplates any suitable processor.

In particular embodiments, memory 804 includes main memory for storing instructions for processor 802 to execute or data for processor 802 to operate on. As an example and not by way of limitation, computer system 800 may load instructions from storage 806 or another source (such as, for example, another computer system 800) to memory 804. Processor 802 may then load the instructions from memory 804 to an internal register or internal cache. To execute the instructions, processor 802 may retrieve the instructions from the internal register or internal cache and decode them. During or after execution of the instructions, processor 802 may write one or more results (which may be intermediate or final results) to the internal register or internal cache. Processor 802 may then write one or more of those results to memory 804. In particular embodiments, processor 802 executes only instructions in one or more internal registers or internal caches or in memory 804 (as opposed to storage 806 or elsewhere) and operates only on data in one or more internal registers or internal caches or in memory 804 (as opposed to storage 806 or elsewhere). One or more memory buses (which may each include an address bus and a data bus) may couple processor 802 to memory 804. Bus 812 may include one or more memory buses, as described below. In particular embodiments, one or more memory management units (MMUs) reside between processor 802 and memory 804 and facilitate accesses to memory 804 requested by processor 802. In particular embodiments, memory 804 includes random access memory (RAM). This RAM may be volatile memory, where appropriate. Where appropriate, this RAM may be dynamic RAM (DRAM) or static RAM (SRAM). Moreover, where appropriate, this RAM may be single-ported or multi-ported RAM. This disclosure contemplates any suitable RAM. Memory 804 may include one or more memories 804, where appropriate. Although this disclosure describes and illustrates particular memory, this disclosure contemplates any suitable memory.

In particular embodiments, storage 806 includes mass storage for data or instructions. As an example and not by way of limitation, storage 806 may include a hard disk drive (HDD), a floppy disk drive, flash memory, an optical disc, a magneto-optical disc, magnetic tape, or a Universal Serial Bus (USB) drive or a combination of two or more of these. Storage 806 may include removable or non-removable (or fixed) media, where appropriate. Storage 806 may be internal or external to computer system 800, where appropriate. In particular embodiments, storage 806 is non-volatile, solid-state memory. In particular embodiments, storage 806 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 806 taking any suitable physical form. Storage 806 may include one or more storage control units facilitating communication between processor 802 and storage 806, where appropriate. Where appropriate, storage 806 may include one or more storages 806. Although this disclosure describes and illustrates particular storage, this disclosure contemplates any suitable storage.

In particular embodiments, I/O interface 808 includes hardware, software, or both, providing one or more interfaces for communication between computer system 800 and one or more I/O devices. Computer system 800 may include one or more of these I/O devices, where appropriate. One or more of these I/O devices may enable communication between a person and computer system 800. As an example and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 808 for them. Where appropriate, I/O interface 808 may include one or more device or software drivers enabling processor 802 to drive one or more of these I/O devices. I/O interface 808 may include one or more I/O interfaces 808, where appropriate. Although this disclosure describes and illustrates a particular I/O interface, this disclosure contemplates any suitable I/O interface.

In particular embodiments, communication interface 810 includes hardware, software, or both providing one or more interfaces for communication (such as, for example, packet-based communication) between computer system 800 and one or more other computer systems 800 or one or more networks. As an example and not by way of limitation, communication interface 810 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 810 for it. As an example and not by way of limitation, computer system 800 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 800 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 800 may include any suitable communication interface 810 for any of these networks, where appropriate. Communication interface 810 may include one or more communication interfaces 810, where appropriate. Although this disclosure describes and illustrates a particular communication interface, this disclosure contemplates any suitable communication interface.

In particular embodiments, bus 812 includes hardware, software, or both coupling components of computer system 800 to each other. As an example and not by way of limitation, bus 812 may include an Accelerated Graphics Port (AGP) or other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 812 may include one or more buses 812, where appropriate. Although this disclosure describes and illustrates a particular bus, this disclosure contemplates any suitable bus or interconnect.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure encompasses all changes, substitutions, variations, alterations, and modifications to the example embodiments described or illustrated herein that a person having ordinary skill in the art would comprehend. The scope of this disclosure is not limited to the example embodiments described or illustrated herein. Moreover, although this disclosure describes and illustrates respective embodiments herein as including particular components, elements, feature, functions, operations, or steps, any of these embodiments may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates particular embodiments as providing particular advantages, particular embodiments may provide none, some, or all of these advantages.

## Claims

1. A method comprising, by a computing system:
receiving query information associated with a machine-learning model;
accessing a knowledge graph that defines relationships between a plurality of machine-learning models and a plurality of features of the plurality of machine-learning models;
determining, based on the knowledge graph and the query information, one or more correlation metrics indicating correlations between the machine-learning model and one or more features of the plurality of features in the knowledge graph; and
determining one or more recommended features for the machine-learning model based on the one or more correlation metrics and the one or more features.

2. The method of Claim 1, wherein the knowledge graph comprises a plurality of nodes and a plurality of edges connecting the plurality of nodes, and wherein the plurality of nodes correspond to the plurality of machine-learning models and the plurality of features of the plurality of machine-learning models.

3. The method of Claim 2, wherein each of the plurality of features is associated with one or more machine-learning models based on associated domain knowledge or inferred correlations as determined based on the knowledge graph, or, wherein each edge of the plurality of edges connects two associated nodes in the knowledge graph, and wherein each edge is associated with a weight for characterizing a relationship between the two associated nodes.

4. The method of Claim 2, further comprising:
generating, for the knowledge graph, a first new node corresponding to the machine-learning model;
generating, for the knowledge graph, one or more second new nodes corresponding to one or more initial features of the machine-learning model; and
generating, for the knowledge graph, one or more new edges connecting the first new node to the one or more second new nodes, wherein the one or more new edges are determined based on domain knowledge associated with the machine-learning model.

5. The method of Claim 4, further comprising:
determining one or more new correlations of the first new node and the one or more second new nodes with respect to the plurality of nodes in the knowledge graph; and
integrating the first new node and the one or more second new nodes into the knowledge graph based on the one or more new correlations, or wherein the one or more correlation metrics are determined based on one or more graph relationships between the first new node and one or more nodes corresponding to the one or more features.

6. The method of Claim 4, wherein the one or more correlation metrics are determined based on one or more graph relationships between the first new node and one or more nodes corresponding to one or more machine-learning models of the plurality of machine-learning models, and wherein the one or more features are associated with the one or more machine-learning models, and, optionally, wherein the machine-learning model shares one or more features with the one or more machine-learning models of the knowledge graph, or
wherein the machine-learning model shares a problem domain with the one or more machine-learning models of the knowledge graph.

7. The method of Claim 1, wherein each machine-learning model of the plurality of machine-learning models is associated with one or more tags for characterizing that machine-learning model, and wherein the machine-learning model is associated with one or more initial features, and, optionally, the method further comprising:
determining one or more new tags for the machine-learning model and each initial feature of the machine-learning model.

8. The method of Claim 7, further comprising:
clustering the one or more initial features of the machine-learning model and the plurality of features in the knowledge graph into a plurality of feature categories in a N-dimensional space as defined by N number of tags.

9. The method of Claim 8, further comprising:
merging one or more of the initial features and one or more of the plurality of features based on associated feature categories.

10. The method of Claim 9, wherein the one or more recommended features are associated with a feature category, and wherein the feature category is associated with an initial feature of the machine-learning model.

11. The method of Claim 1, wherein the one or more correlation metrics are determined by a graphic neural network, wherein the graphic neural network identifies one or more hidden correlations in the knowledge graph, and wherein the one or more correlation metrics are determined based on the one or more hidden correlations in the knowledge graph identified by the graphic neural network, and, optionally, the method further comprising:
generating a new edge corresponding to each hidden correlation identified by the graphic neural network; and
updating the knowledge graph based on the generated new edges.

12. The method of Claim 1, further comprising:
receiving one or more inference value metrics associated with the machine-learning model with the one or more recommended features, wherein the one or more inference value metrics comprise performance parameters of the machine-learning model with the one or more recommended features; and
evaluating the one or more recommended features for the machine-learning model based on the received one or more inference value metrics, and, optionally,
adjusting one or more weights of one or more corresponding edges of the knowledge graph based on the one or more inference value metrics.

13. One or more computer-readable storage media embodying software that is operable when executed to carry out the method of any of claims 1 to 12.

14. A system comprising:
one or more non-transitory computer-readable storage media embodying instructions; and
one or more processors coupled to the storage media and operable to execute the instructions to carry out the method of any of claims 1 to 12.

15. A computer program comprising instructions which, when the program is executed by a computer, cause the computer to carry out the method of any of claims 1 to 12.
